# EUROPEAN PATENT SPECIFICATION

(11) **EP 4 475 679 B1**
(45) Date of publication and mention of the grant of the patent: **28.01.2026**
(21) Application number: 23702598.6
(22) Date of filing: 03.02.2023
(51) Int. Cl.: A01N 43/58, A01P 1/00, A01P 3/00, A01P 7/02, A01P 7/04

(54) **USE OF DIMPROPYRIDAZ FOR REDUCING VIRAL AND BACTERIAL TRANSMISSION**
VERWENDUNG VON DIMPROPYRIDAZ ZUR REDUZIERUNG VON VIREN- UND BAKTERIENÜBERTRAGUNG
UTILISATION DE DIMPROPYRIDAZ POUR RÉDUIRE LA TRANSMISSION VIRALE ET BACTÉRIENNE

(30) Priority: 11.02.2022 EP 22156235
(43) Date of publication of application: 18.12.2024
(73) Proprietor: BASF SE, 67056 Ludwigshafen am Rhein (DE)
(72) Inventor: SANZ-GOMEZ, Jorge, 67117 Limburgerhof (DE); MARCHAL RUBIO, Francisco Javier, 08017 Barcelona (ES); BLANCO RUIZ, Cesar, 41710 Utrera (ES); DE CARVALHO GUERRA SMIRMAUL, Patricia, 04794-000 Sao Paulo (BR); ERLER, Greice, 13830-000 Santo Antonio de Posse (BR); HODGES, Desiree Margaret, Durham, North Carolina 27709-35298 (US)
(74) Representative: BASF IP Association
(86) International application number: PCT/EP2023/052683
(87) International publication number: WO 2023/152045

(56) References cited:
- WO-A1-2012/143317
- WO-A1-2018/055479

## Description

The invention relates to the use of dimpropyridaz for reducing or preventing virus and bacteria transmission from insect vectors to plants and protecting plants from virial and bacterial diseases.

1-[(1*RS*)-1,2-dimethylpropyl]-N-ethyl-5-methyl-N-pyridazin-4-yl-1H-pyrazole-4-carboxamide of formula I: 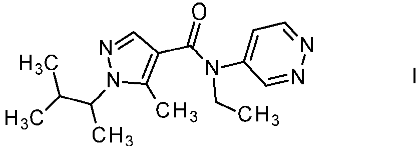 is known from WO 2012/143317. This compound is mentioned to be useful for combating a broad variety of invertebrate pests. It is known under the common name dimpropyridaz. Vectors are organisms that can introduce a pathogen, such as a virus or bacteria, into a plant, by feeding to cause an infection. Suitable vectors include hemipteran species including but not limited to, aphids, whiteflies, leafhoppers, planthoppers, treehoppers, thrips, scales, mealybugs, spittlebugs, plant lice, and psyllids, which also cause direct feeding damage to plants. Disease transmission from vectors to plants is a widespread cause of plant damage, for which there are only few effective measures of control.

Up to now, no anti-viral agents are known for agricultural purposes. The only effective means for reducing viral infections transmitted by vectors is the control of the vectors, e.g., by using insecticides, which stops infestation before it happens. The use of antibiotics in agriculture is not commonly accepted because of its selective activity against only certain bacteria, as well as the nature of use, which can be only curative, once the disease is already present, and overarching implication to human health and antibiotic resistance.

Insecticides alone or in mixtures with other known pesticides, which may be used for reducing viral or bacterial infections transmitted by vectors (insects), are known. For example, the use of mixtures containing pyrethroids and pirimicarb or tetramic acid derivatives for reducing viral infections transmitted by vectors (insects) is known from EP237227, and EP2011394.

However, the effectiveness of these insecticides or insecticidal mixtures in terms of reducing virus and bacteria transmission from insect vectors to plants is not always satisfactory.

This is because the insect vectors are often capable of transmitting the virus or bacteria before the insecticides kill them. It is important to note that, as insect vectors, such as aphids for example, move through a plant and briefly probe, by the time an aphid receives a lethal dose of the insecticide, pathogen transmission will often be completed, and the damage already done. Thus, there is also a need for insecticides, which not only kill the insect vectors, but also cause a quick feeding cessation in insect vectors, which enables vectors to quickly reduce or cease their ability to acquire and transmit the virus before the plant is infected. This quick feeding cessation in insect vectors by an appropriate insecticide not only helps in reducing the severity of disease on affected plants, but also helps in reducing the spread of disease to other plants in field. Hence, there is a need for insecticides, which effectively reduce or cease the ability of insect vectors to transmit the pathogen, if the insect control is not sufficiently effective.

We have found that this need is met by the application of dimpropyridaz to the plant.

Furthermore, it has been observed that some insecticides agitate the insects and encourage greater movement and feeding, resulting in increased rates of viral and bacterial spread. Therefore, there is also a need for insecticides, which inhibit movement and/or feeding of the insect vectors before killing them.

We have found that this need is met by application of dimpropyridaz to the crop.

It is further generally desired to reduce dosage rates of insecticides, and therefore also in connection with combating insect vectors. Accordingly, there is also a need for insecticides, which can be applied in lower doses than conventional insecticides.

We have found that this need is met by application of dimpropyridaz to the crop.

It is therefore the object of the invention to provide an insecticide which satisfies any of the above needs. Surprisingly, it has been found that dimpropyridaz is suitable for reducing or preventing virus and bacteria transmission from insect vectors to plants. Dimpropyridaz controls insect vectors, particularly whiteflies, aphids, and leafhoppers, in all development stages.

In particular, it has been shown that primary and secondary spread of viruses by insect vectors can effectively be reduced or prevented by application of dimpropyridaz.

On the one hand, it has been found that virus or bacteria infected vectors that land on a dimpropyridaz-treated plant will exhibit a reduced ability of the vector to transmit the virus or bacteria. On the other hand, it has been found that non-infected insect vectors, which land on a dimpropyridaz-treated infected plant, will have a reduced ability to transmit the virus or bacteria to adjacent healthy plants.

Therefore, in one aspect, the invention relates to the use of dimpropyridaz for reducing or preventing virus and bacteria transmission from insect vectors to plants.

In this regard, it must be distinguished between non-persistently and persistently transmitted viruses and bacteria.

Non-persistent viruses and bacteria are transferred mechanically via the mouthparts of the insect vectors during feeding (stylet-borne). Non-persistent transmission is typically characterized by an acquisition time (time required by the insect vector to acquire the virus/bacteria) of seconds, an inoculation time (time required by the infectious insect vector to inoculate a plant) of seconds, a latent period (minimum time between acquisition of a virus/bacteria and ability to transmit) of zero, and a retention time (time after acquisition that an insect vector remains capable of transmitting the virus/bacteria) of minutes to hours. In terms of a primary spread, i.e., the initial spread of virus/bacteria into a field by infectious insect vectors from sources outside the field, the short inoculation time is of relevance. On the other hand, the low retention time prevents the spread of the virus/bacteria over long distances. In terms of the secondary spread of the virus/bacteria, i.e. the spread of the virus/bacteria within a field via acquisition of the virus/bacteria by insect vectors from sources of virus/bacteria within the field and spread of the virus/bacteria by these afterwards infectious insect vectors, it is of particular relevance that there is no latent period, so that an insect vector, which has acquired the virus/bacteria from one plant, can directly transmit it to another plant.

Persistent viruses include circulative viruses, which must systemically move within the insect body to be transmitted, and propagative viruses, which must replicate within the insect body to be transmitted. Persistent virus transmission is typically characterized by an acquisition time of minutes, an inoculation time of minutes, a latent period of one or more days, and a long retention time, which often lasts for the life of the insect. As the inoculation time is also rather short in case of persistent virus transmission, primary spread (before killed by insecticide) is an important problem in managing plant diseases.

As the retention time is long, non-infected fields may also be infected due to insect migration from infected fields, which are far away. However, as the latent period is also rather long, secondary spread of the virus or bacteria is delayed because the insect vector cannot directly transmit the virus or bacteria after acquisition. One embodiment of the invention relates to the use of dimpropyridaz for reducing or preventing the spread of persistent virus and bacteria types. Another embodiment of the invention relates to the use of dimpropyridaz for reducing or preventing the primary spread of persistent virus and bacterium types through rapid feeding cessation.

Another embodiment of the invention relates to the use of dimpropyridaz for reducing or preventing the secondary spread of persistent virus and bacterium types.

One embodiment of the invention relates to the use of dimpropyridaz for reducing or preventing the spread of non-persistent virus types. Another embodiment of the invention relates to the use of dimpropyridaz for reducing or preventing the primary spread of non-persistent virus types. Another embodiment of the invention relates to the use of dimpropyridaz for reducing or preventing the secondary spread of non-persistent virus types. Semi-persistent viruses frequently suppress plant defense responses, resulting in an increase of vector population and facilitating viral transmissions during vector outbreaks. In semi-persistent transmission, viruses are retained in the foreguts or salivary glands. Semi-persistent virus transmission is typically characterized by an acquisition time of minutes to hours, and a retention time of hours to days.

For non-persistently transmitted viruses and bacterium, insecticides other than dimpropyridaz often act too slowly to effectively reduce both, primary and secondary spread of the virus. In case of persistently transmitted viruses, insecticides often act too slowly to effectively reduce primary spread of the virus.

A preferred embodiment of the invention relates to the use of dimpropyridaz for reducing or preventing the primary spread of non-persistent and semi-persistent virus types. Another embodiment of the invention relates to the use of dimpropyridaz for reducing or preventing the secondary spread of non-persistent and semi-persistent virus types.

For the reduction of secondary spread, it is required that the insecticide effectively kills all insect vectors, or rapidly ceases feeding of the vectors. However, fast-killing insecticides may have negative effects to non-target arthropods and beneficials.

In another aspect, the invention relates to a method for reducing or preventing transmission from insect vectors to plants, which method comprises applying dimpropyridaz to the insect vectors, crops, plants, plant propagation materials such as seeds, or soil or water, in which the plants are growing. One embodiment of the invention relates to the use of dimpropyridaz for reducing or preventing secondary spread.

In another aspect, the invention relates to a method of protecting plants from viral and bacterial diseases which method comprises applying dimpropyridaz to the non-infected crops, plants, plant propagation materials, such as seeds, or soil or water, in which the plants are growing.

In one embodiment, the invention relates to the use or method for reducing or preventing transmission from insect vectors to plants, which use a method comprised of applying dimpropyridaz, or a stereoisomer, tautomer, salt, or N-oxide thereof to the plant.

Although dimpropyridaz itself and its combined application with other insecticides are known to have shown activity against insect pests, it has not yet been known for solving virus and bacteria caused problems in plants as mentioned above.

Salts of dimpropyridaz are preferably agriculturally and veterinarily acceptable salts. Such salts and their preparation are in general known from WO 2012/143317.

Dimpropyridaz can be used in the form of its N-oxides. Its N-oxides are in general known from WO 2012/143317.

Dimpropyridaz may be amorphous or may exist in one or more different crystalline states (polymorphs) which may have different macroscopic properties such as stability or show different biological properties such as activity. The invention includes the use of both amorphous and crystalline compounds, their enantiomers or diastereomers, mixtures of different crystalline states of dimpropyridaz, its enantiomers or diastereomers, as well as amorphous or crystalline salts thereof.

Dimpropyridaz is suitable for reducing or preventing transmission from insect vectors to plants.

As used herein, the term "virus or bacteria transmission from insect vectors to plants" refers to the introduction of a virus into a plant to cause an infection. Virus transmission is typically characterized by the acquisition time, i.e. the time required by the insect vector to acquire the virus, the inoculation time, i.e. the time required by infectious insect vectors to infect the plant, the latent period, i.e. the minimum time between acquisition of a virus and ability of the insect vector to transmit the virus, and the retention time, i.e. the time after acquisition that an insect vector remains capable of transmitting the virus. As a consequence of reducing virus transmission from insect vectors to plants, insect-vectored viral infections of plants in a field can be reduced. In particular, primary spread of the virus, i.e. the initial spread of virus into a field by infectious insect vectors from sources outside the filed, and/or secondary spread of the virus, i.e. the spread of the virus within a field via acquisition of the virus by insect vectors from sources of virus within the field and spread of the virus by these afterwards infectious insect vectors, may be reduced.

As used herein, the term "virus-infected" or "viral infection" in connection with plants means that the plant has been infected with a virus. As outlined above, viral infection is typically caused by inoculation by an infectious insect vector. Virus transmission from insect vectors to plants typically causes viral infections.

As used herein, the term "pathogen" includes bacteria and viruses.

As used herein, the term "virus or bacteria transmission from insect vectors to plants" refers to the introduction of a pathogens into a plant to cause an infection. Such transmission is typically characterized by the acquisition time, i.e. the time required by the insect vector to acquire the pathogen, the inoculation time, i.e. the time required by infectious insect vectors to infect the plant, the latent period, i.e. the minimum time between acquisition of a pathogen and ability of the insect vector to transmit the pathogen, and the retention time, i.e. the time after acquisition that an insect vector remains capable of transmitting the bacteria. As a consequence of reducing bacteria transmission from insect vectors to plants, insect-vectored bacterial and virus infections of plants in a field can be reduced. Primary spread of the pathogens, i.e., the initial spread of the pathogen into a field by infectious insect vectors from sources outside the filed, and/or secondary spread of the pathogen, i.e., the spread of the pathogen within a field via acquisition of the pathogen by insect vectors from sources of the pathogens within the field and spread of the pathogen by these afterwards infectious insect vectors, may be reduced.

As used herein, the term "bacteria-infected" or "bacterial infection" in connection with plants means that the plant has been infected with a bacterium. As outlined above, bacterial infection is typically caused by inoculation by an infectious insect vector. Bacteria transmission from insect vectors to plants typically causes bacterial infections.

The term "plant" refers to multicellular photosynthetic eukaryotic life-forms belonging to kingdom *Plantae* including crops.

The term "crop" refers to plants grown for food or other commercial purposes. The application of dimpropyridaz to crops is a preferred embodiment of the invention.

As used herein, the term "infectious insect vector" refers to an insect vector, which has acquired a virus and can transmit the virus, which means that the latent period is already over, but the retention time is not yet over. "Infectious insect vectors" may also be described as "viruliferous insect vectors".

As used herein, the term "non-infected" in connection with plants means that the plant is healthy, i.e., not virus-infected. "Non-infected plants" may also be referred to as "virus-free plants". Dimpropyridaz is preferably used in fields comprising exclusively non-infected plants focusing on the reduction or prevention of primary spread of viruses or in fields comprising virus-infected and non-infected plants focussing on the reduction or prevention of secondary spread of the virus.

As used herein, the term "non-infectious" in connection with an insect vector means that the insect vector is not capable of transmitting a virus, preferably that the insect vector has not even acquired a virus.

The term "contacting" includes both direct contact (applying the compound/compositions directly on the animal pest or plant) and indirect contact (applying the compound/compositions to the locus). Maximal contact pertains to the application of dimpropyridaz to the pest and plant jointly. This method is used for insects that have reduced movement while feeding (aphids) or are sessile such as nymphal stages of whiteflies.

"Pesticidally effective amount" means the amount of active ingredient needed to achieve an observable effect on growth, including the effects of necrosis, death, retardation, prevention, and removal, destruction, or otherwise diminishing the occurrence and activity of the target organism. A pesticidally effective amount of the compositions will also vary according to the prevailing conditions e.g., desired pesticidal effect and duration, weather, target species, locus, mode of application.

"Reducing virus transmission" means a reduction of the number of infected plants by at least 50%, or 65%, preferably 80%, particularly 90%, or 95% compared to untreated control.

"Preventing virus transmission" means a reduction of the number of infected plants by at least 99%, preferably by 100% compared to untreated control.

"Reducing bacteria transmission" means a reduction of the number of infected plants by at least 50%, or 65%, preferably 80%, particularly 90%, or 95% compared to untreated control.

"Preventing bacteria transmission" means a reduction of the number of infected plants by at least 99%, preferably by 100% compared to untreated control.

Persistent viruses include the genera *Begomovirus, Luteovirus, Nanovirus, Polerovirus, Tobamovirus,* and *Tospovirus.*

Semi-persistent viruses include the genera *Closterovirus, Crinivirus, Sequivirus,* and *Torradovirus,*

Non-persistent viruses include the genera *Alfamovirus, Carlavirus, Cucumovirus, Fabavirus,* and *Potyvirus.*

Most plant pathogenic bacteria belong to the genera *Erwinia, Pectobacterium, Pantoea, Agrobacterium, Liberibacter, Pseudomonas, Ralstonia, Burkholderia, Acidovorax, Xanthomonas, Clavibacter, Streptomyces, Xylella, Spiroplasma,* and *Phytoplasma. Xyella, Liberibacter, Spiroplasma* and *Phytoplasma* contain the most economically impacting diseases transmitted by *hemipteran* vectors within plants (c.f. Huang, Weijie PMC 2020 Dec 28). Preferred embodiments of the use or method according to the invention for reducing or preventing bacteria and virus transmission from insect vectors to plants comprising the application of dimpropyridaz are described hereinafter. The remarks made as to the preferred embodiments of the use or method of the invention are to be understood as preferred on their own as well as preferably in combination with each other.

In one preferred embodiment of the use or method of the invention, dimpropyridaz is applied to fields of non-infected plants, i.e., fields which exclusively comprise non-infected plants, i.e., do not contain any bacteria or virus-infected plants. As a consequence, primary spread of the bacteria and virus can be reduced or even prevented as dimpropyridaz would prevent or significantly reduce feeding (transmission) of present and incoming insect vectors.

In another preferred embodiment of the use or method of the invention, dimpropyridaz is applied to fields comprising bacteria or virus-infected and non-infected plants. This is particularly suitable to reduce or prevent secondary spread of the bacteria and virus within the field.

In another embodiment, the insect vector is selected from aphids, whiteflies, leafhoppers, thrips, psyllids, scales, and mealybugs, and is preferably selected from the group of aphids, whiteflies, leafhoppers, and thrips, more preferably selected from aphids, whiteflies, and thrips, and is particularly selected from the group of aphids and whiteflies.

In particular, bacteria and viruses may be spread by insects which are one or more of e.g. *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi, Myzus nicotianae, Myzus persicae, Nasonovia ribisnigri, Pemphigus bursarius, Phorodon humuli, Rhopalosiphum insertum Wa, Rhopalosiphum maidis, Rhopalosiphum padi, Schizaphis graminum, Sitobion avenae, Toxoptera aurantii, Toxoptera citricola, Phylloxera vitifoliae, Bemisia tabaci, Nilaparvata lugens, Sogatella furcifera, Laodelphax spp, Nephotettix spp., Trialeurodes vaporariorum, Thrips tabaci, Thrips palmi, Bactericera cockerelli, Dalbulus maidis, Frankliniella schultzei, Frankliniella occidentalis,* and *Diaphorina citri.*

Plants exhibiting aphid damage can have a variety of symptoms, such as decreased growth rates, mottled leaves, yellowing, stunted growth, curled leaves, browning, wilting, low yields and death. The beet mild yellowing virus (BMYV) causes yellow to orange leaf discoloration, the Beet yellow virus (BYV) causes yellowing of leaves, and the Turnip yellow virus (TuYV) causes intervening yellowing of leaves and red, purple, yellow discoloration of the leaf margins.

The removal of sap creates a lack of vigor in the plant, and *aphid saliva* is toxic to plants. Furthermore, aphids frequently transmit disease-causing organisms like plant viruses to their hosts through feeding. The green peach aphid *(Myzus persicae)* is a vector for many plant viruses, such as Turnip yellow virus (TuYV), Beet yellow virus (BYV), Beet chlorosis virus (BChV), and Beet mild yellowing virus (BMYV). Such viruses affect a wide variety of plants such as sugar beet, fodder beets, oilseed rape, brassicas, lettuce crops, mustard, chickpea, lupin, lentil, beans, peas, lucerne, and clover. The bird cherry-oat aphid (*Rhopalosiphum padi*) often infect barley, wheat, oats, maize, triticale, rice with viruses of Luteovirus Genus, mostly Barley yellow dwarf virus (BYDV). Cotton aphids (*Aphis gossypii*) often infect sugarcane, papaya and groundnuts with viruses. Aphids contribute to the spread of late blight (*Phytophthora infestans*) among potatoes. The cherry aphid or black cherry aphid, *Myzus cerasi,* is responsible for some leaf curl of cherry trees. In a particularly preferred embodiment of the invention, the aphid insect vector is thus selected from *Myzus persicae,* and *Rhopalosiphum padi,* particularly the insect vector is *Myzus persicae.*

Similarly, whitefly nymphs and adults feed by inserting their proboscises into the leaf, penetrating the phloem and withdrawing sap. It is during this feeding process that plant pathogens are acquired and transmitted. Particularly, adult whiteflies may disperse and transmit the virus to new plants while feeding. Whiteflies, which represent virus vectors, include whiteflies in the genera *Bemisia* and *Trialeurodes.* A particularly important species of the genera *Bemisia* includes *B*. *tabaci.* Important species of the genera *Trialeurodes* include *T. vaporariorum, T. abutilonea,* and *T. ricini.* Whiteflies (*Bemisia tabaci*) often infect tomato, eggplants, potatoes, tobacco, beans, and peppers with viruses. In another particularly preferred embodiment of the invention, the whitefly insect vector is therefore selected from the group consisting of *B*. *tabaci, T. vaporariorum, T. abutilonea,* and *T. ricini,* particularly the whitefly insect vector is *B*. *tabaci.*

Viruses and bacteria may be spread by psyllids such as Asian Citrus Psyllid (*Diaphorina citri).*

The Asian Citrus Psyllid mainly causes bacterial disease (Citrus Greening, or Huanglongbing (HLB) disease). Corn leafhopper (*Dalbulus maidis*) mainly causes bacterial diseases (corn stunt spiroplasma (CSS) and Maize bushy stunt phytoplasma (MBSP).

In a preferred embodiment of the invention the pathogens are bacteria, such as persistent bacteria.

In a preferred embodiment of the invention the pathogens are viruses, such as persistent viruses.

In one embodiment, the bacteria is selected from the families of *Mycoplasmataceae, Acholeplasmataceae, Rhizobiaceae,* and is preferably selected from the *Spiroplasma, C. Phytoplasma, Liberibacter* geneses respectively.

In one embodiment, the viruses selected are from the families of *Luteoviridae, Closteroviridae, Geminiviridae, Nanoviridae, Betaflexiviridae, Bunyaviridae, Bromoviridae, Potyviridae, Rhabdoviridae, Reoviridae, Secoviridae, Sequiviridae, Solemoviridae, Tospoviridae, Tymoviridae,* or *Virgaviridae,* and is preferably selected from the *Polerovirus* genus of the *Luteoviridae* family, and from the *Begomovirus* genus of the *Geminiviridae* family.

In another embodiment the virus is selected from *Tospovirus* genus of the *Bunyaviridae* family. The tomato chlorotic spot virus (TCSV) mainly affects *Solanaceae,* such as potatoes, tomatoes, eggplants, peppers, and tobacco. The groundnut ringspot virus (GRSV) mainly affects *Solanaceae.* The chrysanthemum stem necrosis virus (CSNV) mainly affects chrysanthemum and tomato crops.

The family *Luteoviridae* includes the genera of *Enamovirus, Luteovirus,* and *Polerovirus.* The *turnip yellows virus (TuYV)* mainly infects oilseed rape, brassicas, lettuce crops, mustard, chickpea, lupin, lentil, beans, peas, lucerne, and clover. The *barley yellow dwarf virus (BYDV)* mainly infects barley, wheat, oats, maize, triticale, and rice. The *beet chlorosis virus (BChV)* and *beet mild yellowing virus (BMYV)* mainly infect sugar beet, and fodder beets. The *cucurbit Aphid-borne Yellows Virus* (CABYV) mainly infect cucumbers, gherkins, courgettes, melons, and pumpkins. The *Beet western yellows virus (BWYV)* mainly infects beets, cabbage, rape, soya, lettuce, pea, potato, turnip and cucurbits. The *pepper vein yellow virus (PeVYV)* mainly infects *Solanaceas.* The *Carrot redleaf virus (CaRLV)* mainly infects carrots.

The family *Closteroviridae* includes the genera of *Closterovirus,* and *Crinivirus.* The beet yellows virus (BYV) mainly infects sugar beet, and fodder beets. *Carrot yellow leaf virus (CYLV)* and *Carrot closterovirus-1 (CtCV-1)* mainly infect carrots, beets, celery, and parsley. *Tomato infectious chlorosis virus (TolCV)* and *Tomato chlorosis virus (ToCV)* mainly infect tomato, lettuce, eggplant, potato, pumpkin, and pepper.

The family of *Geminiviridae* includes the genera *Mastrevirus, Curtovirus, Begomovirus* and *Topocuvirus.* The genus *Topocuvirus* includes the *Tomato pseudo-curly top virus* (TPCTV), which is transmitted in particular through the treehopper *M. malleifera (Hemiptera: Membracidae).*

The genus *Mastrevirus* includes the economically important *Maize streak virus* (MSV), which can be transmitted from nine leaf cicadas species of the genus *Cicadulina.* The persistence of the MSV vector (insect) is very efficient, for example, *C*. *mbila* species remain infectious after they infect up to 35 days and can thus transmit this virus.

The genus *Curtovirus* includes the *Beet curly top virus* (BCTV), which can be transmitted by the beet leaf *cicade Circulifer tenellus* (Baker) many plant species.

The genus *Begomovirus* includes species of the family *Geminiviridae.* They include the *Tomato yellow leaf curl virus* (TYLCV), *Tomato yellow leafcurl Sardinia virus* (TYLCSV), *Tomato yellow leaf curl China virus* (TYLCCSV), *Tomato mottle virus* (Tomov), *Tobacco curly shoot virus* (TbCSV). These viruses mainly infect tomato, eggplants, potatoes, tobacco, beans, and peppers.

The family *Nanoviridae* includes the genera *Babuvirus* and *Nanovirus.* The *Babuvirus* genus includes the *Banana bunchy top virus* (BBTV), and the *Nanovirus* genus includes the economically very important *Faba bean virus necrotic bean yellow virus* (FBNYV), which mainly infects faba bean, chickpea, and other *Leguminosae.*

The family *Betaflexiviridae* includes the genus of *Carlavirus.* The *Potato virus M* (PVM) and *Potato virus* S (PVS) mainly infect potato, tomato, and other *solanaceae.* The *Lily symptomless virus (LSV)* mainly infects lilies. The *Hop mosaic virus (HMV)* mainly infects hops.

The family *Bromoviridae* includes the genera of *Alfamovirus* and *Cucumovirus.* The *Alfalfa mosaic virus (AMV)* mainly infects Alfalfa, lettuce, potato, and tomato. The *Cucumber mosaic virus* (CMV) mainly infects cucumber, squash, melons, peppers, tomato, carrots, celery, lettuce, spinach, and beets. The *Tomato aspermy virus (TAV)* mainly infects tomato.

The family *Potyviridae* includes the genus of *Potyvirus.* The *Potato virus V (PVV)* and *Potato virus Y (PVY)* mainly infect potato. The *Lettuce mosaic virus (LMV)* mainly infects lettuce, safflower, and quinoa. The *Turnip mosaic virus (TuMV)* mainly infects Cabbage, cauliflower, radish, and turnip. The Zucchini yellow mosaic virus (ZYMV) mainly infects Pumpkins, squashes, marroes, courgette, melon, watermelon, cucumber, and gherkin. The *Tobacco etch virus (TEV)* mainly infects Tobacco, tomato, potato, pepper, and other *Solanaceae.* The *Tulip breaking virus (TBV)* mainly infects Tulips and lilies. The *Lily mottle virus* (LMoV) mainly infects lilies. The *Cucumber vein yellowing virus (CVYV)* mainly infects cucurbits. The *Watermelon mosaic virus (WMV)* mainly infects cucurbits and legumes. The *Bean common mosaic virus (BCMV)* and the *Bean yellow mosaic virus (BYMV)* mainly infect *leguminosae;* beans, peas, chickpeas, lentils, soybean, and lupins. The *Plum Pox virus (PPV)* mainly infects plums, peaches, apricots, nectarine, and cherries. The *European maize mosaic virus (EMMV)* mainly infects corn, and sorgum. The *Soybean mosaic virus (SMV)* mainly infects soybean. The *Onion yellow dwarf virus (OYDV)* mainly infects onion. The *Beet mosaic virus (BtMV)* mainly infects sugar beet, fodder beets, and spinach. The *sugarcane mosaic virus* (SCMV) mainly infects *Poaceae* such as corn and sorghum.

All enveloped plant viruses such as *Rhabdoviruses* and *Bunyaviruses* are transmitted in a persistent propagative way.

It is known in the art that with each vector (insect), with each vector population or each vector biotype, depending on the sex of the vector (insect) or developmental stage (nymphs/adults), differences in virus transmission may occur.

The genus *Tospovirus* belongs to the family *Bunyaviridae.* This family includes five genera: *Hanta, Nairo, Orthobunya, Phlebo* and Tosbo viruses. The genus *Tospovirus* includes the *Tomato spotted will virus* (TSWV), *Tomato chlorotic spot virus* (TCSV), *Groundnut ringspot virus* (GRSV), and *Chrysanthemum stem necrosis virus* (CSNV). The *Tospovirus* genus relates to a particular embodiment of the invention.

The *Rhabdoviridae* family includes the viruses that are transmitted on both vertebrates, invertebrates, and plants including pathogens of humans, livestock and crops can. To the plant infecting viruses belong the two genera *Nucleorhobdovirus* and *Cytorhabdovirus.* To the *Nucleorhobdovirus* genus belongs *Sonchus yellow net virus* (SYNV), *Maize mosaic virus* (MMV), *Taro vein chlorosis virus* (TaVCV), *Rice yellow stunt virus* (RYSV) and *Maize fine streak virus* (MFSV). To the genus *Cytorhabdovirus* belongs, e.g., *Northern cereal mosaic virus* (NCMV) and *Lettuce necrotic yellow virus* (LNYV).

Genus *Tenuivirus* comprises in addition to the *Maize stripe virus* (MStV) and *Rice stripe virus* (RSV) also *Maize yellow stripe virus* (MYSV). For example, *Tenui viruses* can be acquired in a very short time by vectors (insects) from infected plants.

The family *Reoviridae* includes nine genera, of which the genera *Orbireovirus, Coltivirus, Cy-povirus* can infect insects as vectors, while the genera *Fijiviruses, Phytoreovirus* and *Oryzavirus* species can also infect plants. The transoviral transmission of Reo viruses in vectors (insects) was shown for the *Fiji disease virus (FDV), Oat sterile dwarf virus* (OSDV), *Maize rough dwarf virus* (MRDV), *Nilaparvata lugens virus* (NLV), *Rice dwarf virus* (RDV), *Wound tumor virus*

(WTV) and *Rice gall dwarf virus* (RGDV). To the genus *Fuji* virus belongs also the *Rice black streaked dwarf virus* (RBSDV) and the *Male de Rio Cuarto virus* (MRCV).

Finally, the family of the genus *Tymoviridae* comprises the genus *Marafivirus,* which includes, e.g., the *Maize ryadofino virus* (MRFV).

Plant diseases caused by the aforementioned virus genera can be reduced or prevented, or the aforementioned plant can be protected by the inventive use of dimpropyridaz, or method of applying dimpropyridaz to the plants, particularly to the non-infected plants.

While plant viruses and their vectors are well understood and able to be separated into the distinct classes and subclasses across persistent, semi-persistent and non-persistent much less is understood regarding plant infecting bacteria and their associated insect vectors (c.f. Front. Plant Sci. 09 August 2016, Sec. Plant Pathogen Interactions; https://www.frontiersin.org/articles/10.3389/fpls.2016.01163/full) Since it is known that bacteria can be acquired by infected plants in both vascular systems: phloem and xylem, presumption is that majority of bacterial diseases, as vectored by insects, will be obligate intercellar persistent and semi-persistent, circulative, and non-circulative, and minority in non-persistent. It should also be noted that bacterial acquisition within plants can also occur via contaminated soil or seed, plant injury with exposure to infected debris or airborne spores. Several of the families that impact plant health also contain genera and or species that impact human (mammalian) health as well.

The family Erwiniaceae contains genera Erwinia which includes more than 20 species, of which *E. amylovora* or fire blight appearing on pome and stone fruits may be the most common. Additionally, there is *E. tracheiphila* causing bacterial wilt in cucurbits and ornamentals such as orchid. As well as sub-genera *Pantoea* containing at least 9 species some of which are opportunistic and able to impact humans. Most common P. *stewartia* causing Stewart's wilt in corn and other poaceae, such as sugarcane, bacterial leaf wilt, rice leaf blight, and jack-fruit bronzing disease.

The family Pectobacteriaceae contains genera Dickeya, Brenneria and Pectobacterium with 8 to 9 species per genera. *Dickeya solani* is a common example of bacterium that impacts potato and other solanaceous crops commonly known as blackleg or soft rot. Brenneria and pectobaceterium are commonly associated with diseases in woody crops and are closely related to those in the *Erwinia* genera, to which they used to belong.

The family Rhizobiaceae over 20 genera including but not limited to Agrobacterium and Liberibacter. Agrobacteria are most noted for development of gall like growths and use in GMO transformations within a range of row crops such as soybean, cotton, maize, etc. Liberibacter is most noted for semi-persistent presence, hemolymph, and salivary glands, within psyllids, potato and Asian citrus psyllid, transmitting zebra chip disease in potatoes and solanaceous crops and Huanglongbing disease (HLB) or Citrus Greening in citrus.

The genera Pseudomonas, of family Pseudomonadaceae, express a range of plant diseases with common symptomology of rot, gall formation and necrosis and contain saprophytic plant growth promoting pseudomonas (PGPPs).

The family Burkholderiaceae contains two major plant infecting genera Ralstonia and Burkholderia. of infects a wide range of solanaceous crops such as potato, eggplant, tomato, wild woody nightshade, pepper, as well as soybean, ginger, and a range of ornamentals causing Ralstonia wilt.

The genera Burkholderia contains 20 or more species including *Burkholderia glumae* which causes grain and seedling rot in rice as well as wilt within solanaceous crops as well as sesame and others.

The genera Acidovorax of the Comamonadaceae family contains 15 species, such as *Acidovorax avenae* that impact cucurbit and cereal crops causing bacterial fruit blotch.

The family Xanthomonadaceae contains genera Xanthomonas of many species, nearly 30, that impact a wide range of more than 400 differing plant species. Responses in plants are ranging from citrus canker, by *Xanthomonas citri* and bacterial leaf spot and bacterial blight such as *Xanthomonas oryzae* of rice. This family also contains the genera *Xylella* which contains the species *X. fastidiosa. X. fastidiosa* is commonly vectored by leafhoppers such as sharpshooters and other hemipterans such as spittlebugs. Many diseases are associated across a wide range of crops including but not limited to, bacterial leaf scorch in oleander and coffee, alfalfa dwarf, Pierce's disease in grapes, olive quick decline syndrome in olive trees and citrus variegated chlorosis in citrus.

The genera Clavibacter of the family Microbacteriaceae causes bacterial canker or ring rot via *Clavibactermichiganensis* impacting solanaceous crops including tomato.

The genera *Streptomyces* of the family Streptomycetaceae has at least 10 species that are plant pathogenic, but over 500 species within the family, causes lesions on tuber and root crops such as soleanceous, potato via S. *scabies,* but typically this genus is associated with soil borne pathogens and not vector borne.

The genera *Xyella* contains over 600 species that impact plants. Disease symptomology includes leaf cholorosis, withering, changes in internodal growth, changes in fruit size and abscission, sticky leaf appearance, etc. As an example, *Xyella fastidiosa* is an aerobic plant pathogen that harbors in xylem tissues and is transmitted by xylem feeding insects such as leafhoppers/sharpshooters and spittlebugs resulting in chlorosis, leaf scorch, etc. A specific result is Pierce's disease (PD) in grapes.

The genera Spiroplasma, family Spiroplamataceae and class Mollicutes including several pathogens that cause diseases within plants but are also capable of infecting mammals and acting in a symbiotic way with same species, i.e., *Drosophila sp.* protection from parasitic nematodes or as a driver of speciation by impacting other arthropods including ladybug, bees, ants, beetles and butterflies via male-killing. Focus for crop diseases are *Spiroplasma citri* causing citrus stubborn disease and *Spiroplasma kunkelii* for corn stunt disease.

The genera Phytoplasma also of the class Mollicutes, containing genus *Candidatus* impact a tremendous range of crops including but not limited to tropical fruits (ex. coconut), stone fruits, sugarcane, and woody trees and are most commonly vectored by hemipteran pests. Phytoplasmas are obligate phloem tissue pathogens that require insect vectors for plant-to-plant transmission. Specific example of economic importance is *Candidatus phytoplasma* causing Maize bushy stunt vectored by corn leafhoppers, *Dalbulus maidis.*

Plant diseases caused by the aforementioned bacteria genera can be reduced or prevented, or the afore-mentioned plant can be protected by the inventive use of dimpropyridaz, or method of applying dimpropyridaz to the plants, to both the non-infected and infected plants.

For certain viruses and bacteria, certain insect vectors can be identified. For example:
If the insect vector is an aphid, such as *Myzus persicae* or *Rhopalosiphum padi,* the virus may preferably be from the *Luteoviridae* family, in particular from the *Polerovirus* or *Luteovirus* genus. Preferred *Polerovirus* or *Luteovirus* are *Turnip yellow virus, Barley yellow dwarf virus, Beet yellow virus, Beet chlorosis virus,* and *Beet mild yellowing virus.*

If the insect vector is a whitefly, the virus may preferably be from the *Geminiviridae* family, in particular from the *Begomovirus* genus. A preferred *Begomovirus* is *Tomato yellow leaf curl virus.*

If the insect vector is a leafhopper, such as *Dalbulus maidis,* bacteria such as *Spiroplasma kunkelii* (Mollicutes-bacteria), and Maize bushy stunt phytoplasma (MBSP) are transmitted. Citrus greening (HLB) is vectored by Asian citrus psyllid *(Diaphornia citri).*

In a preferred embodiment of the invention, the plants are selected from the group consisting of Alfalfa, barley, beans, beets, brassicas, cabbage, carrots, cauliflower, celery, chervil, chickpea, clover, coriander, courgette, cucumber, cucurbits, eggplants, fava bean, fodder beets, gherkins, lentil, lettuce, lucerne, lupin, maize, marrows, melons, mustard, oats, oilseed rape, ornamentals, parsley, parsnip, peas, peppers, potatoes, pumpkins, quinoa, radish, rape, rice, safflower, soya, spinach, squashes, sugar beet, tobacco, tomato, triticale, turnip, watermelon, and wheat.

In a particularly preferred embodiment of the invention, the plants are selected from the group consisting of Tomato, eggplants, potatoes, tobacco, beans, peppers, Oilseed rape, physalis plants, brassicas, lettuce crops, mustard, chickpea, lupin, lentil, beans, peas, lucerne, clover, Barley, wheat, oats, maize, triticale, rice, Sugar beet, and fodder beets.

Viruses and plants of particular relevance in the context of the invention are further defined hereinafter.

In a preferred embodiment, the invention relates to the use or method for reducing or preventing virus transmission to plants, and protecting plants from virus diseases, which method or use comprises applying dimpropyridaz, wherein the virus is a *Closterovirus.*

In another preferred embodiment, the invention relates to the use or method for reducing or preventing virus transmission to plants, and protecting plants from virus diseases, which method or use comprises applying dimpropyridaz, wherein the virus is a *Luteovirus.*

In another preferred embodiment, the invention relates to the use or method for reducing or preventing virus transmission to plants, and protecting plants from virus diseases, which method or use comprises applying dimpropyridaz, wherein the virus is a *Polerovirus.*

In another preferred embodiment, the invention relates to the use or method for reducing or preventing virus transmission to plants, and protecting plants from virus diseases, which method or use comprises applying dimpropyridaz, wherein the virus is a *Begomovirus.*

In one embodiment, the invention relates to the use or method for reducing or preventing virus transmission to plants, and protecting plants from virus diseases, which method or use comprises applying dimpropyridaz, wherein the virus is a *Sobemovirus.*

In one embodiment, the invention relates to the use or method for reducing or preventing virus transmission to plants, which method or use comprises applying dimpropyridaz, wherein the virus is a *Caulimovirus.*

In one embodiment, the invention relates to the use or method for reducing or preventing virus transmission to plants, and protecting plants from virus diseases, which method or use comprises applying dimpropyridaz, wherein the virus is a *Sequivirus.*

In one embodiment, the invention relates to the use or method for reducing or preventing virus transmission to plants, and protecting plants from virus diseases, which method or use comprises applying dimpropyridaz, wherein the virus is a *Enamovirus.*

In one embodiment, the invention relates to the use or method for reducing or preventing virus transmission to plants, and protecting plants from virus diseases, which method or use comprises applying dimpropyridaz, wherein the virus is a *Umbravirus.*

In one embodiment, the invention relates to the use or method for reducing or preventing virus transmission to plants, and protecting plants from virus diseases, which method or use comprises applying dimpropyridaz, wherein the virus is a *Nanovirus.*

In one embodiment, the invention relates to the use or method for reducing or preventing virus transmission to plants, and protecting plants from virus diseases, which method or use comprises applying dimpropyridaz, wherein the virus is a *Cytorhabdovirus.*

In one embodiment, the invention relates to the use or method for reducing or preventing virus transmission to plants, and protecting plants from virus diseases, which method or use comprises applying dimpropyridaz, wherein the virus is a *Nucleorhabdovirus.*

In another embodiment, the invention relates to the use or method for reducing or preventing bacteria transmission to plants, and protecting plants from bacterial diseases, which method or use comprises applying dimpropyridaz, wherein the bacteria are selected from *Spiroplasma kunkelii* and *Candidatus phytoplasma.*

In one embodiment, the invention relates to the use or method for reducing or preventing virus transmission to plants, and protecting plants from virus diseases, which method or use comprises applying dimpropyridaz, wherein the plant is a specialty crop.

In one embodiment, the invention relates to the use or method for reducing or preventing virus transmission to plants, and protecting plants from virus diseases, which method or use comprises applying dimpropyridaz, wherein the plant is fruiting vegetable.

In one embodiment, the invention relates to the use or method for reducing or preventing virus transmission to plants, and protecting plants from virus diseases, which method or use comprises applying dimpropyridaz, wherein the plant is leafy vegetable.

In one embodiment, the invention relates to the use or method for reducing or preventing virus transmission to plants, and protecting plants from virus diseases, which method or use comprises applying dimpropyridaz, wherein the plant is of *Solanaceae,* preferably tomato.

In one embodiment, the invention relates to the use or method for reducing or preventing virus transmission to plants, and protecting plants from virus diseases, which method or use comprises applying dimpropyridaz, wherein the plant is of *Solanaceae,* preferably eggplants.

In one embodiment, the invention relates to the use or method for reducing or preventing virus transmission to plants, and protecting plants from virus diseases, which method or use comprises applying dimpropyridaz, wherein the plant is of *Solanaceae,* preferably potatoes.

In one embodiment, the invention relates to the use or method for reducing or preventing virus transmission to plants, and protecting plants from virus diseases, which method or use comprises applying dimpropyridaz wherein the plant is of *Solanaceae,* preferably physalis.

In one embodiment, the invention relates to the use or method for reducing or preventing virus transmission to plants, and protecting plants from virus diseases, which method or use comprises applying dimpropyridaz wherein the plant is of *Solanaceae,* preferably tobacco.

In one embodiment, the invention relates to the use or method for reducing or preventing virus transmission to plants, and protecting plants from virus diseases, which method or use comprises applying dimpropyridaz, wherein the plant is of *Fabaceae,* preferably beans.

In one embodiment, the invention relates to the use or method for reducing or preventing virus transmission to plants, and protecting plants from virus diseases, which method or use comprises applying dimpropyridaz, wherein the plant is of *Solanaceae,* preferably peppers.

In one embodiment, the invention relates to the use or method for reducing or preventing virus transmission to plants, and protecting plants from virus diseases, which method or use comprises applying dimpropyridaz, wherein the plant is of *Brassicaceae,* preferably Oilseed rape.

In one embodiment, the invention relates to the use or method for reducing or preventing virus transmission to plants, and protecting plants from virus diseases, which method or use comprises applying dimpropyridaz, wherein the plant is of *Brassicaceae,* preferably brassicas.

In one embodiment, the invention relates to the use or method for reducing or preventing virus transmission to plants, and protecting plants from virus diseases, which method or use comprises applying dimpropyridaz, wherein the plant is of *Asteraceae,* preferably lettuce.

In one embodiment, the invention relates to the use or method for reducing or preventing virus transmission to plants, and protecting plants from virus diseases, which method or use comprises applying dimpropyridaz, wherein the plant is of *Brassicaceae,* preferably mustard.

In one embodiment, the invention relates to the use or method for reducing or preventing virus transmission to plants, and protecting plants from virus diseases, which method or use comprises applying dimpropyridaz, wherein the plant is of *Fabaceae,* preferably chickpea.

In one embodiment, the invention relates to the use or method for reducing or preventing virus transmission to plants, and protecting plants from virus diseases, which method or use comprises applying dimpropyridaz, wherein the plant is of *Fabaceae,* preferably lupin.

In one embodiment, the invention relates to the use or method for reducing or preventing virus transmission to plants, and protecting plants from virus diseases, which method or use comprises applying dimpropyridaz, wherein the plant is of *Fabaceae,* preferably lentil.

In one embodiment, the invention relates to the use or method for reducing or preventing virus transmission to plants, and protecting plants from virus diseases, which method or use comprises applying dimpropyridaz, wherein the plant is of *Fabaceae,* preferably beans.

In one embodiment, the invention relates to the use or method for reducing or preventing virus transmission to plants, and protecting plants from virus diseases, which method or use comprises applying dimpropyridaz, wherein the plant is of *Fabaceae,* preferably peas.

In one embodiment, the invention relates to the use or method for reducing or preventing virus transmission to plants, and protecting plants from virus diseases, which method or use comprises applying dimpropyridaz, wherein the plant is of *Fabaceae,* preferably lucerne.

In one embodiment, the invention relates to the use or method for reducing or preventing virus transmission to plants, and protecting plants from virus diseases, which method or use comprises applying dimpropyridaz, wherein the plant is of *Fabaceae,* preferably clover.

In one embodiment, the invention relates to the use or method for reducing or preventing virus transmission to plants, and protecting plants from virus diseases, which method or use comprises applying dimpropyridaz, wherein the plant is of *Poaceae,* preferably barley.

In one embodiment, the invention relates to the use or method for reducing or preventing virus transmission to plants, and protecting plants from virus diseases, which method or use comprises applying dimpropyridaz, wherein the plant is of *Poaceae,* preferably wheat.

In one embodiment, the invention relates to the use or method for reducing or preventing virus transmission to plants, and protecting plants from virus diseases, which method or use comprises applying dimpropyridaz, wherein the plant is of *Poaceae,* preferably oats.

In one embodiment, the invention relates to the use or method for reducing or preventing virus transmission to plants, and protecting plants from virus diseases, which method or use comprises applying dimpropyridaz, wherein the plant is of *Poaceae,* preferably maize (syn. corn).

In one embodiment, the invention relates to the use or method for reducing or preventing bacteria transmission to plants, and protecting plants from bacterial diseases, which method or use comprises applying dimpropyridaz, wherein the plant is of *Poaceae,* preferably maize (syn. corn).

In one embodiment, the invention relates to the use or method for reducing or preventing virus transmission to plants, and protecting plants from virus diseases, which method or use comprises applying dimpropyridaz, wherein the plant is of *Poaceae,* preferably triticale.

In one embodiment, the invention relates to the use or method for reducing or preventing virus transmission to plants, and protecting plants from virus diseases, which method or use comprises applying dimpropyridaz, wherein the plant is of *Poaceae,* preferably rice.

In one embodiment, the invention relates to the use or method for reducing or preventing virus transmission to plants, and protecting plants from virus diseases, which method or use comprises applying dimpropyridaz, wherein the plant is of *Amaranthaceae,* preferably sugar beet.

In one embodiment, the invention relates to the use or method for reducing or preventing virus transmission to plants, and protecting plants from virus diseases, which method or use comprises applying dimpropyridaz, wherein the plant is of *Amaranthaceae,* preferably fodder beets.

Individual embodiments of the invention are such methods or uses for reducing or preventing virus transmission from insect vectors to plants, wherein the virus and the plant is as defined in entries A-1 to A-30 of Table A.1 which method or use comprises applying dimpropyridaz to the plant.

Individual embodiments of the invention are such methods or uses for protecting plants from virus diseases, wherein the mainly affected crop, and the virus is as defined in entries A-1 to A-30, which methods or uses comprise applying dimpropyridaz to fields comprising non-infected plants only.

**Table A.1**

| No. | Virus | Crops affected |
|---|---|---|
| A-1 | TYLCV | Tomato |
| A-2 | TYLCV | eggplants |
| A-3 | TYLCV | potatoes |
| A-4 | TYLCV | tobacco |
| A-5 | TYLCV | beans |
| A-6 | TYLCV | peppers |
| A-7 | TuYV | Oilseed rape |
| A-8 | TuYV | brassicas |
| A-9 | TuYV | physalis |
| A-10 | TuYV | lettuce |
| A-11 | TuYV | mustard |
| A-12 | TuYV | chickpea |
| A-13 | TuYV | lupin |
| A-14 | TuYV | lentil |
| A-15 | TuYV | beans |
| A-16 | TuYV | peas |
| A-17 | TuYV | lucerne |
| A-18 | TuYV | clover |
| A-19 | BYDV | Barley |
| A-20 | BYDV | wheat |
| A-21 | BYDV | oats |
| A-22 | BYDV | maize |
| A-23 | BYDV | triticale |
| A-24 | BYDV | rice |
| A-25 | BYV | Sugar beet |
| A-26 | BYV | fodder beets |
| A-27 | BChV | Sugar beet |
| A-28 | BChV | fodder beets |
| A-29 | BMYV | Sugar beet |
| A-30 | BMYV | fodder beets |

These viruses are preferably spread by insects as defined above, e.g. by one or more of *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi, Myzus nicotianae, Myzus persicae, Nasonovia ribisnigri, Pemphigus bursarius, Phorodon humuli, Rhopalosiphum insertum, Rhopalosiphum maidis, Rhopalosiphum padi, Schizaphis graminum Rond., Sitobion avenae, Toxoptera aurantii, Toxoptera citricola, Phylloxera vitifoliae, Bemisia tabaci, Myzus persicae, Nilaparvata lugens, Sogatella furcifera, Laodelphax spp, Nephotettix spp.,Aphis gossypii, Trialeurodes vaporariorum,* and *Bactericera cockerelli.* In particular, the viruses are spread by whiteflies or aphids as defined above, particularly by *Mycus persicae, Bemisia tabaci,* or *Rhopalosiphum padi.*

Individual embodiments of the invention are such methods or uses for reducing or preventing bacteria transmission from insect vectors to plants, wherein the bacterium and the plant is as defined in entries AB-1 to AB-3 of Table A.2 which method or use comprises applying dimpropyridaz to the plant.

Individual embodiments of the invention are such methods or uses for protecting plants from bacterial diseases, wherein the bacterium and the plant is as defined in entries AB-1 to AB-3 of Table A.2 which method or use comprises applying dimpropyridaz to the plant.

**Table A.2**

| No. | Bacteria | Crops affected |
|---|---|---|
| AB-1 | *Spiroplasma kunkelii* | corn |
| AB-2 | *Candidatus phytoplasma* | corn |
| AB-3 | *Liberbacter spp.* (H LB) | citrus |

These bacteria are preferably spread by insects as defined above, e.g., by one or more of *Dalbulus maidis* and/or *Diaphornia citri.*

Individual embodiments of the invention are such methods or uses for reducing or preventing virus transmission from insect vectors to plants, wherein the virus and the mainly affected plants are as defined in entries V-1 to V-14 of following table, which methods or uses comprise applying dimpropyridaz to the plant.

Individual embodiments of the invention are such methods or uses for protecting plants from virus diseases, wherein the mainly affected plant/crop, and the virus is as defined in entries V-1 to V-14, which methods or uses comprise applying dimpropyridaz to fields comprising non-infected or infected plants.

| No. | Virus genus | Plants / Crops |
|---|---|---|
| V-1 | Sobemovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-2 | Carlavirus | Hops, lilies, potato, tomato, other *Solanaceae* |
| V-3 | Caulimovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-4 | Sequivirus | soybean, rice, cotton, oilseed rape, peanut, cereals: wheat, barley, corn; specialty crops, fruiting vegetable, leafy |
| | | vegetable, tomato, pepper, eggplant, cabbage, lettuce, potatoes, onions, tobacco, beet, bean, physalis |
| V-5 | Enamovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-6 | Luteovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-7 | Polerovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-8 | Umbravirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-9 | Nanovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-10 | Cytorhabdovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-11 | Nucleorhabdovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-12 | Begomovirus | soybean, rice, cotton, oilseed rape, peanut, cereals: wheat, barley, corn; specialty crops, fruiting vegetable, leafy vegetable, tomato, pepper, eggplant, cabbage, lettuce, potatoes, onions, tobacco, beet, bean, physalis |
| V-13 | Potyvirus | Potato, tomato, tobacco, tulips, lilies, lupins, lettuce, safflower, quinoa, cabbage, cauliflower, radish, turnip, cucurbits, pumpkins, plums, peaches, apricots, nectarine, cherries, squashes, marroes, courgette, melon, watermelon, cucumber, gherkin, pepper, beans, peas, chickpeas, lentils, onion, soybean, sugar beet, fodder beets, spinach, corn, sorghum, other *Leguminosae,* other *Solanaceae* |
| V-14 | Tospovirus | Pepper, lettuce, tobacco, tomato, ornamentals, other *Poaceae,* other *Solanaceae* |

Individual embodiments of the invention are such methods or uses for protecting plants from bacterial diseases, wherein the mainly affected plant/crop, including but not limited to within table below, and the bacteria is as defined in entries X-1 to X-14, which methods or uses comprise applying dimpropyridaz to fields comprising non-infected or infected plants.

| No. | Bacterial genus | Plants / Crops (example) |
|---|---|---|
| X-1 | Erwinia | pome fruits (apples, pears, Asian pears) tropical fruits (papaya, guava) cucurbits, ornamentals (orchids), legumes |
| X-2 | Pantoea subgenera of Erwinia | tropical fruits (jackfruit), corn |
| X-3 | Pectobacterium | woody trees (elm), potatoes other root and tuber vegetables, beet, sugar beet, |
| X-4 | Agrobacterium | soybean, cotton, maize, sugar beet, alfalfa, wheat, OSR, canola, pasture, rice, clade of eudicots including sunflower, brassicas, pome fruits, tree nuts, leafy trees and ornamentals. |
| X-5 | Liberbacter | potatoes other solanaceous and root/tuber crops, citrus, pome fruits |
| X-6 | Pseudomonas | woody trees (aspen and liliac), blueberry and other berries, ornamentals |
| X-7 | Burkholderia (family Burkholderiaceae) | common rhizobium species - nitrogen fixing symbiote, legumes, maize, coffee, rice |
| X-8 | Ralstonia (family Burkholderiaceae) | solanaceous crops: potato, tomato, eggplant, peppers, also soybean, tropical fruits (banana) tobacco, ginger, olive, ornamentals (rose, geranium) |
| X-9 | Acidovorax | citrus, ornamentals (orchids), cucurbits, rice, cereals (wheat) |
| X-10 | Xanthomonas | citrus, rice, pomegranate, sugarcane, tree nuts, pasture (alfalfa), cruciferous vegetables, tree nuts (hazelnut, walnut), strawberries, lettuce, cotton, legumes, solanaceous crops (tomato, pepper) |
| X-11 | Clavibacter | solanceous crops (tomato, potato) |
| X-12 | Streptomyces | solanaceous crops (potato, sweet potato), other root and tuber crops |
| X-13 | Xyella | oleander, coffee, pasture (alfalfa), grapes, citrus, olive trees |
| X-14 | Spiroplasma | citrus, corn |
| X-15 | Phytoplasma | pome fruit, stone fruit (cherry, peach, nectarine), tropical fruits (coconut, passion fruit, papaya), sugarcane, corn, woody trees (sandalwood, ash, elm), onions, garlic, solanaceous crops (potato, tomato), citrus, grapes, strawberry, ornamentals (hibiscus, periwinkle), tree nuts (almond), pasture (clover, foxtail), palms, sunflower |

Individual embodiments of the invention are such methods or uses for reducing or preventing virus transmission from insect vectors to plants, wherein the vector, the virus and the mainly affected plant/crop is as defined in entries B-1 to B-54 of Table B, which methods or uses comprise applying dimpropyridaz to the plants.

Individual embodiments of the invention are such methods or uses for protecting plants from virus diseases, wherein the mainly affected plant/crop, the virus, and the transmitting insect, and is as defined in entries B-1 to B-54 of Table B, which methods or uses comprise applying dimpropyridaz to fields comprising non-infected or infected plants

**Table B**

| No. | Vector/insect | Virus | Genus | Plant families / Crops |
|---|---|---|---|---|
| B-1 | *Myzus persicae, Aphis craccivora* (aphids) | Alfalfa mosaic virus (AMV) | Alfamovirus | *Fabaceae, Solanaceae,* e.g. alfalfa, lettuce, potato, tomato |
| B-2 | *Bemisia tabaci* (whitefly) | Tomato leaf curl New Dehli virus (ToLCNDV) | Begomovirus | *Solanaceae,* e.g. tomato, potatoes, tobacco, beans, peppers |
| B-3 | *Bemisia tabaci* (whitefly) | Tomato yellow leaf curl virus (TYLCV) | Begomovirus | *Fabaceae, Solanaceae,* e.g. tomato, eggplants, potatoes, tobacco, beans, peppers |
| B-4 | *Myzus persicae* (aphid) | Beet yellow virus (BYV) | Closterovirus | *Amaranthaceae,* e.g. sugar beet, fodder beets |
| B-5 | *Cavariella aegopodii, Myzus persicae* (aphid) | Carrot yellow leaf virus (CYLV) | Closterovirus | *Amaranthaceae, Apiaceae,* e.g. carrots, beets, celery, parsley |
| B-6 | *Cavariella aegopodii, Myzus persicae* (aphid) | Carrot closterovirus-1 (CtCV-1) | Closterovirus | *Amaranthaceae, Apiaceae,* e.g. carrots, beets, celery, parsley |
| B-7 | *Myzus persicae, Aphis frangulae, Aphis nasturtii, Macrosiphum euphorbiae* (aphid) | Potato virus M (PVM) | Carlavirus | *Solanaceae,* e.g. potato, tomato |
| B-8 | *Myzus persicae, Aphis nasturtii, Aphis frangulae* (aphids) | Potato virus S (PVS) | Carlavirus | *Solanaceae,* e.g. potato, tomato |
| B-9 | *Myzus persicae, Macrosiphum euphorbiae, Phorodon humuli, Aphis gosypii* (aphids) | Hop mosaic virus (HMV) | Carlavirus | Hops |
| B-10 | *Myzus persicae* (aphids) | Lily symptomless virus (LSV) | Carlavirus | Lilies |
| B-11 | *Myzus persicae, Aphis gossypii* (aphids) | Cucumber mosaic virus (CMV) | Cucumovirus | *Amaranthaceae, Apiaceae, Cucurbitaceae,* e.g. cucumber, squash, melons, peppers, tomato, carrots, celery, lettuce, spinach, beets |
| B-12 | *Myzus persicae* (aphids) | Tomato aspermy virus (TAV) | Cucumovirus | Tomato |
| B-13 | *Trialeurodes vaporarium* (whiteflies) | Tomato infectious chlorosis virus (TolCV) | Crinivirus | *Solanaceae,* e.g. tomato, lettuce, eggplant, potato, pumpkin, pepper |
| B-14 | *Bemisia tabaci, Trialeurodes vaporarium* (whiteflies) | Tomato chlorosis virus (ToCV) | Crinivirus | *Solanaceae,* e.g. tomato, lettuce, eggplant, potato, pumpkin, pepper |
| B-15 | *Myzus persicae* (aphids) | Broaden bean wilt virus (BBWV) | Fabavirus | *Brassicaceae, Fabaceae, Solanaceae* |
| B-16 | *Dalbulus maidis* (corn leafhopper) | Maize rayado fino virus (MRFV) | Marafivirus | *Poaceae,* e.g. maize |
| B-17 | Aphis fabae, *Acyrthosiphom pisum, Aphis craccivora, Myzus persicae* (aphids) | Faba bean necrotic yellows virus (FBNYV) | Nanovirus | Fabaceae, e.g. faba bean, chickpea, other Leguminosae |
| B-18 | *Myzus persicae* (aphids) | Carrot redleaf virus (CaRLV) | Luteovirus | Carrots |
| B-19 | *Rhopalosiphum padi* (aphid) | Barley yellow dwarf virus (BYDV) | Luteovirus | Poaceae, e.g. barley, wheat, oats, maize, triticale, rice |
| B-20 | *Myzus persicae* (aphid) | Beet chlorosis virus (BChV) | Luteovirus | *Amaranthaceae,* e.g. sugar beet, fodder beets |
| B-21 | *Myzus persicae* (aphid) | Beet mild yellowing virus (BMYV) | Luteovirus | *Amaranthaceae,* e.g. sugar beet, fodder beets |
| B-22 | *Cavariella aegopodii, Myzus persicae* (aphid) | Parsnip yellow fleck virus (PYVF) | Sequivirus | *Apiaceae,* e.g. carrots, parsnip, celery, parsley, chervil, coriander |
| B-23 | *Cavariella aegopodii, Myzus persicae* (aphid) | Carrot torrado virus (CaTV) | Torradovirus | *Apiaceae,* e.g. carrots |
| B-24 | *Bemisia tabaci, Trialeurodes vaporarium* (whiteflies) | Tomato torrado virus (ToTV) | Torradovirus | *Solanaceae,* e.g. tomato, eggplants, peppers |
| B-25 | *Myzus persicae, Aphis gossypii* (aphids) | Cucumber green mottle mosaic virus (CGMMV) | Tobamovirus | *Cucurbitaceae,* e.g. cucumber, melon, watermelon |
| B-26 | *Frankliniellia occidentalis, Thrips palmi, Thrips tabaci* (thrips) | Tomato spotted wilt virus (TSWV) | Tospovirus | *Solanaceae, Poaceae,* e.g. pepper, lettuce, tobacco, tomato, ornamentals |
| B-27 | *Frankliniella schultzei, Frankliniella occidentalis* (thrips) | Tomato chlorotic spot virus (TCSV) | Tospovirus | *Solanaceae, Poaceae,* e.g. pepper, lettuce, tobacco, tomato, ornamentals |
| B-28 | *Frankliniella schultzei, Frankliniella occidentalis* (thrips) | Groundnut ringspot virus (GRSV) | Tospovirus | *Solanaceae, Poaceae,* e.g. pepper, lettuce, tobacco, tomato, ornamentals |
| B-29 | *Frankliniella schultzei, Frankliniella occidentalis* (thrips) | Chrysanthemu m stem | Tospovirus | *Solanaceae, Poaceae,* e.g. pepper, lettuce, tobacco, tomato, ornamentals |
| | | necrosis virus (CSNV) | | |
| B-30 | *Myzus persicae, Aphis gossypii* (aphids) | Cucurbit Aphid-borne Yellows Virus (CABYV) | Poleovirus | *Cucurbitaceae,* e.g. cucumbers, gherkins, courgettes, melons, pumpkins |
| B-31 | *Myzus persicae, Macrosiphum euphorbiae, Aulacorthum solani* (aphids) | Beet western yellows virus (BWYV) | Polerovirus | *Amaranthaceae, Cucurbitaceae,* e.g. beets, cabbage, rape, soya, lettuce, pea, potato, turnip, cucurbits |
| B-32 | *Myzus persicae* (aphid), *Bemisia tabaci* (whitefly) | Turnip yellows virus (TuYV) | Polerovirus | *Brassicaceae, Fabaceae,* e.g. oilseed rape, brassicas, lettuce, mustard, chickpea, lupin, lentil, beans, peas, lucerne, clover |
| B-33 | *Myzus persicae, Macrosiphum euphorbiae* (aphids) | Potato leaf roll virus (PLRV) | Poleovirus | *Solanaceae,* e.g. potato, tomato |
| B-34 | *Myzus persicae* (aphids) | Pepper vein yellow virus (PeVYV) | Polerovirus | *Solanaceae* |
| B-35 | *Myzus persicae* (aphids) | Tobacco etch virus (TEV) | Potyvirus | *Solanaceae,* e.g. tobacco, tomato, potato, pepper, other *Solanaceae* |
| B-36 | *Myzus persicae, Macrosiphum euphorbiae, Aphis frangulae, and Aphis nasturtii* (aphids) | Potato virus A (PVA) | Potyvirus | *Solanaceae,* e.g. potato, tomato, tobacco |
| B-37 | *Myzus persicae, Macrosiphum euphorbiae, Brachycaudus helichrysi* (aphids) | Potato virus V (PVV) | Potyvirus | *Solanaceae,* e.g. potato |
| B-38 | *Myzus persicae* (aphids) | Tulip breaking virus (TBV) | Potyvirus | Tulips, lilies |
| B-39 | *Myzus persicae* (aphids) | Lily mottle virus (LMoV) | Potyvirus | Lilies |
| B-40 | *Myzus persicae* (aphids) | European maize mosaic virus (EMMV) | Potyvirus | Maize, sorghum |
| B-41 | *Myzus persicae, Aphis fabae, Aphis gossypii, Aphis nasturtii* (aphids) | Potato virus Y (PVY) | Potyvirus | *Solanaceae,* e.g. potato |
| B-42 | *Myzus persicae, Aphis gossypii* (aphids) | Zucchini yellow mosaic virus (ZYMV) | Potyvirus | *Cucurbitaceae,* e.g. pumpkins, squashes, marroes, melon, watermelon, cucumber, gherkin |
| B-43 | *Myzus persicae* (aphids) | Beet mosaic virus (BtMV) | Potyvirus | Sugar beet, fodder beets, spinach |
| B-44 | *Aphis gossypii, Myzus persicae, Aphids fabae, Aphis craccivora* (aphids) | Watermelon mosaic virus (WMV) | Potyvirus | Cucurbits, legumes |
| B-45 | *Myzus persicae* (aphids) | Onion yellow dwarf virus (OYDV) | Potyvirus | Onion |
| B-46 | *Aphis fabae, Aphis pisum, Aphis craccivora, Myzus persicae* (aphids) | Bean common mosaic virus (BCMV) | Potyvirus | *Leguminosae;* beans, peas, chickpeas, lentils, soybean, lupins |
| B-47 | *Acyrthosiphon pisum, Aphis fabae, Myzus persicae, Rhopalosiphum padi* (aphids) | Soybean mosaic virus (SMV) | Potyvirus | Soybean |
| B-48 | *Myzus persicae, Aphis gossypii,* | Lettuce mosaic virus (LMV) | Potyvirus | *Asteraceae,* e.g. lettuce, safflower, quinoa |
| | *Macrosiphum euphorbiae* (aphids) | | | |
| B-49 | *Aphis fabae, Aphis pisum, Acyrthosiphon pisum, Aphis craccivora, Myzus persicae* (aphids) | Bean yellow mosaic virus (BYMV) | Potyvirus | *Leguminosae;* beans, peas, chickpeas, lentils, soybean, lupins |
| B-50 | *Myzus persicae, Brachycaudus helichrysi, Brachycaudus cardui* (aphids) | Plum Pox virus (PPV) | Potyvirus | Plums, peaches, apricots, nectarine, cherries |
| B-51 | *Myzus persicae, Aphis craccivora, Macrosiphum euphorbiae* (aphids) | Turnip mosaic virus (TuMV) | Potyvirus | *Brassicaceae,* e.g. cabbage, cauliflower, radish, turnip |
| B-52 | *Bemisia tabaci* (whitefly) | Cucumber vein yellowing virus (CVYV) | Potyvirus | Cucurbits |
| B-53 | *Myzus persicae, Rhopalosiphum maidis, Aphis gossypii, Rhopalosiphum padi, Macrosiphum miscanthi* (aphids) | Maize dwarf mosaic virus (MDMV) | Potyvirus | *Poaceae,* e.g. barley, wheat, oats, maize, triticale, rice, sugarcane, sorghum |
| B-54 | *Rhopalosiphum maidis* (aphids) | Sugarcane Mosaic Virus (SCMV) | Potyvirus | *Poaceae,* e.g. maize, sorghum |

Individual embodiments of the invention are such methods or uses for protecting plants including but not limited to bacterial diseases, wherein the mainly affected plant/crop, the bacteria, and the transmitting insect, is as defined in entries C-1 to C-5 of Table C, which methods or uses comprise applying dimpropyridaz to fields comprising non-infected or infected plants. List is reduced to showcase bacteria of economic importance that likewise correlates with insect vector-based transmission.

**Table C**

| No. | Vector insect | Bacteria | Genus | Plant / Crops |
|---|---|---|---|---|
| C-1 | Asian citrus psyllid *(Diaphornia citn),* African citrus psyllid *(Trioza erytreae),* potato/tomato/eggp lant psyllid *(Bactericera cockerelli* or *Acizzia colnicola)* | Huanglongbing disease (HLB) or Citrus greening, zebra chip | Liberbacter | potatoes other solanaceous and root/tuber crops, citrus, pome fruits |
| C-2 | Hemiptera | Citrus canker X. *citri,* Bacterial leaf spot X. *spps.,* Bacterial blight, *X. oryzae* | Xanthomonas | citrus, rice, pomegranate, sugarcane, tree nuts, pasture (alfalfa), cruciferous vegetables, tree nuts (hazelnut, walnut), strawberries, lettuce, cotton, legumes, solanaceous crops (tomato, pepper) |
| C-3 | Cicadellidae, Aphrophoridae: sharpshooters, spittlebugs | *X. fastidiosa:* Leaf scorch col., Olive quick decline syndrome (OQDS), citrus variegated chlorosis (CVC), Pierce's disease (PD) | Xyella | oleander, coffee, pasture (alfalfa), grapes, citrus, olive trees |
| C-4 | Cicadellidae: Leafhoppers | Citrus stubborn disease *(S. citri),* Corn stunt disease *(S. kunkelii)* | Spiroplasma | citrus, corn |
| C-5 | Cicadellidae, Fulgoridae, Psyllidae: Leaf/planthoppers, plant lice | Maize bushy stunt phytoplasma (MBSP), Yellows col., potato purple top wilt, witches' broom col., bunchy top col., stunting col., white leaf, decline col. | Phytoplasma | pome fruit, stone fruit (cherry, peach, nectarine), tropical fruits (coconut, passion fruit, papaya), sugarcane, corn, woody trees (sandalwood, ash, elm), onions, garlic, solanaceous crops (potato, tomato), citrus, grapes, strawberry, ornamentals (hibiscus, periwinkle), tree nuts (almond), pasture (clover, foxtail), palms, sunflower |

Particular embodiments of the invention are such methods or uses for protecting plants including but not limited to viral and bacterial diseases, wherein the mainly affected plant/crop, the bacteria, and the transmitting insect, is as defined in entries D-1 to D-5 of Table D, which methods or uses comprise applying dimpropyridaz to fields comprising non-infected or infected plants.

**Table D**

| No. | Vector | Host | Disease |
|---|---|---|---|
| D-1 | Corn leafhopper *(Dalbulus maidis)* | Corn | *Spiroplasma kunkelii:* Corn stunt spiroplasma (CSS), *Candidatus phytoplasma:* Maize bushy stunt phytoplasma (MBSP) |
| D-2 | Cotton aphid *(Aphis gossypii)* | Cotton; wide range | Cotton bunchy top (CBT) |
| D-3 | Green peach aphid *(Myzus persicae)* | Oil seed rape Sugar beet | Turnip yellow virus (TuYV) Beet yellow virus (BYV) |
| D-4 | Bean aphid *(Aphis fabae)* | Sugar beet | Beet yellow virus (BYV) |
| D-5 | Bird cherry oat aphid *(Rhopalosi)phum padi* | Barley | Barley yellow dwarf virus (BYDV) |

Furthermore, it has been found that dimpropyridaz is especially suitable for the purpose of the invention, if applied in combination with a further pesticidally active compound. Such combinations and mixture ratios are known e.g. from WO2013/189801, WO2016/128261, and WO2018/234478.

Accordingly, the invention therefore relates to the use or method for reducing or preventing virus and bacteria transmission from insect vectors to plants, which method or use comprises applying dimpropyridaz which is applied in combination with at least one further pesticidally active compound. Another aspect of the invention relates to a method for protecting plants from viral and bacterial diseases which method comprises applying dimpropyridaz which is applied in combination with at least one further pesticidally active compound.

Dimpropyridaz for use in this invention can be used in customary types of agrochemical compositions, e.g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials e.g. seeds (e.g. GF). These and further composition types are known from WO2012143317. The agrochemical compositions generally comprise between 0.01 and 95%, preferably between 0.1 and 90%, and most preferably between 0.5 and 75%, by weight of active substance. The active substance is employed in a purity of from 90% to 100%, preferably from 95% to 100%.

The user applies the composition according to the invention usually from a pre-dosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters of the ready-to-use spray liquor are applied per hectare of agricultural useful area.

The application can be carried out both before and after the infestation of the crops, plants, plant propagation materials by the insect vector. Preferably, the application is carried out before the crops, plants, plant propagation materials are infected with the virus by insect vector. Dimpropyridaz can be applied as such or in form of compositions comprising them, preferably SL and SC formulations.

In a preferred embodiment of the use or method of the invention, dimpropyridaz is applied to the foliage of the plants, preferably in an amount of from 20 g to 200 g per hectare, more preferably in an amount of from 30 g to 150 g per hectare, e.g. from 90 g to 120 g or from 120 g to 150 g or from 30 g to 120 g per hectare.

In another embodiment of the use or method of the invention, dimpropyridaz is applied to the seeds of the plant, preferably in an amount of from 1 g to 200 g per 100 kg seed, preferably from 5 g to 100 kg per 100 kg of seed, e.g. from 10 to 30 g or from 40 to 60 g or from 70 to 90 g per 100 kg of seed.

### Examples

The invention is illustrated in further detail by the following biological examples.

Examples across both lab and field environments present a strong trend relating dimpropyridaz use, either in a preventative, prior to vector insect natural or artificial infestation, or curative, maximal plant, and insect contact, to a greater reduction in overall presence of related plant diseases by crop system compared to other insecticides. Based on feeding EPG, honeydew clock and related field trials it is concluded that dimpropyridaz drives a reduction in feeding both in duration probing and salvation or ingestion. Correlation of these laboratory results were mirrored in overall presence of disease as noted visually or through ELISA confirmation that reduction in disease presence was independent of noted pest populations.

Dimpropyridaz was used as a 120g/l SL formulation in Experiments 1 to 4, and as a 220g/I SC formulation in Experiments 5 to 9, resp. The formulations were diluted with water to give the spray liquids for use in the experiments below.

Imidacloprid was used as a commercial formulation, dilution and applied rate according to its label. All treatments were applied using a backpack pressurized

Experiments 1 to 6: sprayed until runoff (upper and lower side of the leaf).

Experiments 7 to 9: sprayed with water volume adapted to crop size:
- Exp. 7: 200 I/ha (Nozzle type: Lu 120/02)
- Exp. 8: 300 I/ha (Nozzle type: 9)
- Exp. 9: 250 I/ha (Nozzle type: Flat fan)

The ELISA test is a microplate-based test in which an antibody is linked to an enzyme prior to reaction with the antigen. It is followed by assessment of the enzyme conjugated antibody-antigen reaction or activity upon incubation with the enzyme-specific substrate changing the color of the substrate (https://www.sciencedirect.com/topics/immunology-and-microbiology/enzyme-linked-immunosorbent-assay). This change in color means the virus is present in the plant (positive test). The percentage is the portion of virus-infested plants (ELISA test positive) of the total number of plants.

For Examples 7 to 9 the visual assessment was the source of the %-values of infested plants. It is a visual estimation in % of number of plants showing symptoms within a plot. Symptoms of virus are depending on the species. An ELISA test was used for confirmation that the shown symptoms are caused by the virus.

Symptoms of virus diseases are: BMYV: yellow to orange leaf discoloration; BYV: yellowing of leaves; TuYV: inter-veining yellowing of leaves and red, purple, yellow discoloration of the leaf margins.

### Example 1: Activity of dimpropyridaz against the primary spread of Turnip yellows virus (TuYV) from viruliferous insect vectors to virus-free plants

In a cage, viruliferous *Myzus persicae* aphids carrying *Turnip yellows virus* (TuYV) were transferred to healthy *Physalis floridiana* plants (15 aphids/plant) which were previously treated with dimpropyridaz 24 hours before starting the experiment. The viruliferous aphids could move freely in the cage for 14 days. After this period, plants were treated with Imidacloprid to eliminate all aphids. Three weeks after the experiment was completed, virus infection was evaluated by visual assessment of symptoms (TuYV: intervening yellowing of leaves and red, purple, yellow discoloration of the leaf margins), and by ELISA test. Four independent replicates were performed with forty-eight test plants per assay. Plants treated only with water were used as control.

**Table 1. Transmission rate (%) of Turnip yellows virus (TuYV) in the primary spread experiment after 14 days of inoculation access period.**

| Treatment | Dose-rate applied (Conc.) | Virus transmission rate (%)* |
|---|---|---|
| Control | - | 83.9 % a |
| dimpropyridaz | 3.6 g a.i./100 L | 14.6 % b |

| | | |
|---|---|---|
| *Different letters mean statistically significant different (χ2 test; P<0.05). | | |

According to these results, dimpropyridaz was effective in reducing the primary dispersion/spread of the virus compared to the untreated control. Viruliferous aphids landing on the treated plants showed a reduced ability to transmit the virus.

### Example 2: Activity of dimpropyridaz against the secondary spread of Turnip yellows virus (TuYV) by insect vectors from virus-infected plants to healthy plants.

In a cage, five *Physalis floridiana* plants which were previously infested with *Turnip yellows virus* (TuYV) and 48 healthy test receptor plants, were treated with dimpropyridaz 24 hours before starting the experiment. 200 non-viruliferous aphids *(Myzus persicae)* were released in the cage in which they could move freely for 14 days. After this period, all plants were treated with Imidacloprid to eliminate all aphids. Three weeks after the experiment was completed, virus infection was evaluated by visual assessment of symptoms in the receptor plants, and by ELISA test. Three independent replicates were performed with forty-eight test plants per assay. Plants treated only with water were used as control.

**Table 2. Transmission rate (%) of Turnip yellows virus (TuYV) in the secondary spread after 14 days of exposure.**

| Treatment | Dose-rate applied (Conc.) | Virus transmission rate (%)* |
|---|---|---|
| Control | - | 57.8 % a |
| dimpropyridaz | 3.6 g a.i./100 L | 0.0 % b |

| | | |
|---|---|---|
| *Different letters mean statistically significant different (χ2 test; P<0.05). | | |

According to these results, dimpropyridaz was effective in preventing the secondary spread of the virus compared to the untreated control. Aphids landing on the treated plants showed no ability to transmit the virus to adjacent healthy plants.

### Example 3: Activity of dimpropyridaz against the primary spread of Tomato yellow leaf curl virus (TYLCV) from viruliferous insect vectors to virus-free plants

In a cage, 300 viruliferous *Bemisia tabaci* whiteflies carrying *Tomato yellow leaf curl virus* (TYLCV) were released to healthy tomato plants which were previously treated with dimpropyridaz 24 hours before starting the experiment. The viruliferous aphids could fly freely in the cage for 3 days. After this period, plants were treated with Imidacloprid to eliminate all whiteflies. Three weeks after the experiment was completed, virus infection was evaluated by visual assessment of symptoms, and by ELISA test. Three independent replicates were performed with forty-eight test plants per assay. Plants treated only with water were used as control.

**Table 3. Transmission rate (%) of Tomato yellow leaf curl virus (TYLCV) in the primary spread after 14 days of inoculation access period.**

| Treatment | Dose-rate applied (Conc.) | Virus transmission rate (%)* |
|---|---|---|
| Control | - | 84.7 % a |
| dimpropyridaz | 9.6 g a.i./100 L | 27.1 % b |

| | | |
|---|---|---|
| *Different letters mean statistically significant different (χ2 test; P<0.05). | | |

According to these results, dimpropyridaz was effective in reducing the primary spread of the virus compared to the untreated control. Viruliferous whiteflies landing on the treated plants showed a reduced ability to transmit the virus.

### Example 4: Activity of dimpropyridaz against the secondary spread of Tomato yellow leaf curl virus (TYLCV) by insect vectors from virus-infected plants to healthy plants.

In a cage, five tomato plants which were previously infested with *Tomato yellow leaf curl virus* (TYLCV) and 48 healthy test receptor plants, were treated with the compound 24 hours before starting the experiment. 300 non-viruliferous adult whiteflies (*Bemisia tabaci*) were released in the cage in which they could fly freely for 14 days. After this period, all plants were treated with Imidacloprid to eliminate all whiteflies. Three weeks after the experiment was completed, virus infection was evaluated by visual assessment of symptoms in the receptor plants, and by ELISA test. Three independent replicates were performed with 48 test plants per assay. Plants treated only with water were used as control.

**Table 4. Transmission rate (%) of Tomato yellow leaf curl virus (TYLCV) in the secondary spread after 14 days of exposure.**

| Treatment | Dose-rate applied (Conc.) | Virus transmission rate (%)* |
|---|---|---|
| Control | - | 85.4 % a |
| dimpropyridaz | 9.6 g a.i./100 L | 0.7 % b |

| | | |
|---|---|---|
| *Different letters mean statistically significant different (χ2 test; P<0.05). | | |

According to these results, dimpropyridaz was effective in reducing the secondary spread of the virus compared to the untreated control. Whiteflies landing on the treated plants showed a reduced ability to transmit the virus to adjacent healthy plants.

### Example 5: Activity of dimpropyridaz against the primary spread of Barley yellow dwarf virus (BYDV) from viruliferous insect vectors to virus-free plants

In a cage, viruliferous *Rhopalosiphum padi* aphids carrying *Barley yellow dwarf virus* (BYDV) were transferred to healthy barley plants (15 aphids/plant) which were previously treated with dimpropyridaz 24 hours before starting the experiment. The viruliferous aphids could fly freely in the cage for 14 days. After this period, plants were treated with Imidacloprid to eliminate all aphids. Three weeks after the experiment was completed, virus infection was evaluated by visual assessment of symptoms, and by ELISA test. Four independent replicates were performed with 48 test plants per assay. Plants treated only with water were used as control.

**Table 5. Transmission rate (%) of Barley yellow dwarf virus (BYDV) in the primary spread after 14 days of inoculation access period.**

| Treatment | Dose-rate applied | Virus transmission rate (%)* |
|---|---|---|
| Control | - | 87.7 % a |
| dimpropyridaz | 44 g a.i./ha | 3.7 % b |

| | | |
|---|---|---|
| *Different letters mean statistically significant different (χ2 test; P<0.05). | | |

According to these results, dimpropyridaz was effective in reducing the primary dispersion/spread of the virus compared to the untreated control. Viruliferous aphids landing on the treated plants showed a reduced ability to transmit the virus.

### Example 6: Activity of dimpropyridaz against the secondary spread of Barley yellow dwarf virus (BYDV) by insect vectors from virus-infected plants to healthy plants.

In a cage, five barley plants which were previously infested with *Barley yellow dwarf virus* (BYDV) and 64 healthy test receptor plants, were treated with dimpropyridaz 24 hours before starting the experiment. 250 non-viruliferous aphids (*Rhopalosiphum padi*) were released in the cage in which they could fly freely for 14 days. After this period, all plants were treated with Imidacloprid to eliminate all aphids. Three weeks after the experiment was completed, virus infection was evaluated by visual assessment of symptoms in the receptor plants, and by ELISA test. Three independent replicates were performed with 48 test plants per assay. Plants treated only with water were used as control.

**Table 6. Transmission rate (%) of Barley yellow dwarf virus (BYDV) in the secondary spread after 14 days of exposure.**

| Treatment | Dose-rate applied | Virus transmission rate (%)* |
|---|---|---|
| Control | - | 90.4 % a |
| dimpropyridaz | 44 g a.i./ha | 0.0 % b |

| | | |
|---|---|---|
| *Different letters mean statistically significant different (χ2 test; P<0.05). | | |

According to these results, dimpropyridaz was effective in preventing the secondary spread of the virus compared to the untreated control. Aphids landing on the treated plants showed no ability to transmit the virus to adjacent healthy plants.

### Example 7: Activity of dimpropyridaz against the spread of Beet mild yellowing virus (BMYV) under field conditions.

In a field in Sieboldshausen, Germany (maritime EPPO climatic zone¹), viruliferous *Myzus persicae* aphids carrying *Beet mild yellowing virus* (BMYV) were transferred to plots with 100 healthy sugarbeet plants (10 aphids/plant in 4 plats/plot) which were treated with dimpropyridaz directly after inoculation and 7 days later. The viruliferous aphids could fly freely in the field plots. After 3 months, virus infection was evaluated by visual assessment of symptoms and confirmed by ELISA test. Four independent replicates were used. Non-treated plots (with 100 healthy sugarbeet plants) were used as control.

**Table 7. Infection level rate (%) of Beet mild yellowing virus (BMYV) three months after inoculation with viruliferous aphids.**

| Treatment | Dose-rate applied | Virus transmission rate (%)* |
|---|---|---|
| Control (untreated) | - | 85.6 % a |
| dimpropyridaz | 44g a.i./ha (2 applications of 22g a.i./ha) | 6.1 % b |

| | | |
|---|---|---|
| *Different letters mean statistically significant different (χ2 test; P<0.05). | | |

According to these results, dimpropyridaz was effective in reducing the spread of the virus compared to the untreated control under field conditions.

¹Guidance on comparable climates PP 1/241 (2). *Efficacy evaluation of plant protection products.* European and Mediterranean Plant Protection Organization (EPPO), 2014.

### Example 8: Activity of dimpropyridaz against the spread of Beet yellows virus (BYV) under field conditions.

In a field in the province of Valladolid, Spain (Mediterranean EPPO climatic zone¹), 30m²-plots of sugarbeet plants were treated with Dimpropyridaz when natural aphid *(Myzus persicae)* infestation begun. After 3 months, virus infection was evaluated by visual assessment of symptoms and confirmed by ELISA test. Four independent replicates were used. Non-treated 30m²-plots of sugarbeet plants were used as control.

**Table 8. Infection level rate (%) of Beet yellows virus (BYV) three months after the compound application.**

| Treatment | Dose-rate applied | Virus transmission rate (%)* |
|---|---|---|
| Control (untreated) | - | 20.8 % a |
| dimpropyridaz | 44 g a.i./ha | 0.8 % b |

| | | |
|---|---|---|
| *Different letters mean statistically significant different (χ2 test; P<0.05). | | |

According to these results, dimpropyridaz was effective in reducing the spread of the virus compared to the untreated control under field conditions.

### Example 9: Activity of dimpropyridaz against the spread of Turnip yellows virus (TuYV) under field conditions.

In a field in Sag, Romania (south-east EPPO climatic zone), 30m²-plots of oilseed plants were treated with dimpropyridaz when natural aphid *(Myzus persicae)* infestation begun. After 3 months, virus infection was evaluated by visual assessment of symptoms and confirmed by ELISA test. Four independent replicates were used. Non-treated 30m²-plots of oilseed plants were used as control.

**Table 9. Infection level rate (%) of Turnip yellows virus (TuYV) three months after the compound application.**

| Treatment | Dose-rate applied | Virus transmission rate (%)* |
|---|---|---|
| Control (untreated) | - | 22.5 % a |
| dimpropyridaz | 17.6 g a.i./ha | 2.5 % b |

| | | |
|---|---|---|
| *Different letters mean statistically significant different (χ2 test; P<0.05). | | |

According to these results, dimpropyridaz was effective in reducing the spread of the virus compared to the untreated control under field conditions.

Example 10: Disease transmission reduction and mortality on *Dalbulus maidis* control Insects that are vectors of two major pathogens leading to maize stunting in corn, Mollicutes bacteria, *Spiroplasma kunkelli,* and Maize bushy stunt phytoplasma can be a big problem for growers, since some time may pass before the insecticide kills the insect, during which the insect can transmit the disease to a healthy plant. The relation of bacteria vector of *Dalbulus maidis* (Corn leafhopper, DALBMA) is a persistent manner, which means, the insect can transmit or acquire the disease only if its feeds for a longer duration of time in the phloem vessel. In this case a good insecticide for disease vector, needs to kill the insect but moreover needs to quickly stop feeding activities to avoid disease transmission.

Corn plants of *Zea mays* (ZEAMX) were planted using normal spacing for variety AG 8480 PRO3 (row spacing 0.5m and plant density 4 plant/m). Plots size was 6x6m (36m²). Treatments were applied via foliar application five days after emergence and was repeated every 5 days. Total number of applications within trial period was seven. Spray volume was 120L/ha and nozzles used to do the application was XR 110.02, spacing between nozzles 0.5m and pression 2.5 bar. Average application time for full study ranged from ~30-50 minutes.

Dimpropyridaz was used as a 120g/L SL formulation compared to commercial standards tested: Thiamethoxam + Lambda cyhalothrin: Engeo^{®} Pleno 141g/L+106g/L SC (Syngenta); Imidacloprid + Bifenthrin: Galil^{®} 300g/L SC (ADAMA) in the rates shown below.

| Rate (gai/ha) | | |
|---|---|---|
| Dimpropyridaz | Thiamethoxam + Lambda cyhalothrin | Imidacloprid + Bifenthrin |
| 108 | 42.3 + 31.8 | 75 + 15 |
| 120 | | |

| Application code | Description | Extended BBCH Scale |
|---|---|---|
| A | 5 days after emergence | 11 - 1^{st} leaf unfolded |
| B | 5 days after application A | 15 - 5 leaves unfolded |
| C | 5 days after application B | 19 - 9 or more leaves unfolded |
| D | 5 days after application C | 30 - beginning stem elongation |
| E | 5 days after application D | 35 - 5 nodes detectable |
| F | 5 days after application E | 39 - 9 nodes detectable |
| G | 5 days after application F | 42 - tassel emergence |

Different assessments were conducted throughout the trial period:
NUMBER: count number of insects alive in 15 central plants on the plot.
INFECT: Evaluate 15 central plants on the plot and evaluate according to scale of stunting symptomology severity.
Scale1: plant without symptom
Scale 2: Plants with leaves less of 25% of symptoms (leave red or yellow)
Scale 3: plants with leaves 25-50% with symptoms
Scale 4: Plants with leaves 50-75% with symptoms
Scale 5: Plants with leaves more than 75% with symptoms
Scale 6: plants died due to symptoms

### YIELD: harvest (kg/ha)

| Code | Assessment timing description |
|---|---|
| E05 | 5 Days after application E |
| F05 | 5 Days after application F |
| G05 | 5 Days after application G |
| G10 | 10 Days after application G |
| G15 | 15 Days after application G |
| 099 | HARVEST |

| Assessment | Evaluation | | | | | |
|---|---|---|---|---|---|---|
| | E05 | F05 | G05 | G10 | G15 | 099 |
| NUMBER | X | X | X | X | | |
| INFECT | | | | | X | |
| HARVEST | | | | | | X |

**Table 10-1: Results based on averages of replicates, subsamples per plot of: Efficacy (%) control of Dalbulus, Stunting symptomology severity (scale 1-6) and Harvest (kg/ha)**

| Treatment | Rate (gai/ha) | Efficacy (%) | | | | Symptom Severity 'Stunting' (scale 1-6) | Harvest (kg/ha) |
|---|---|---|---|---|---|---|---|
| | | E05 | F05 | G05 | G10 | G15 | 099 |
| Control | - | 0.0 | 0.0 | 0.0 | 0.0 | 4.5 | 3999 |
| Dimpropyridaz | 108 | 3.5 | 1.5 | 17.8 | 16.7 | 1.8 | 5445 |
| | 120 | 33.9 | 38.0 | 39.9 | 41.5 | 1.5 | 5857 |
| Thiamethoxam + Lambda cyhalothrin | 42.3 + 31.8 | 65.8 | 76.4 | 86.9 | 88.3 | 3.0 | 4018 |
| Imidacloprid + Bifenthrin | 75 + 15 | 14.6 | 14.6 | 14.6 | 14.6 | 3.0 | 4340 |

The results show the impact of dimpropyridaz treatment on bacterial disease transmission for *Dalbulus maidis* on corn crop. Percent efficacy of vector, population control, dalbulus, by dimpropyridaz at 108g ai/ha rate showed comparable efficacy as imidacloprid + bifenthrin at G05 and G10, 17.8, 16.7 and 14.6, respectively. Via 120g ai/ha rate dimpropyridaz showed higher efficacy than imidacloprid + bifenthrin and lower efficacy compared with thiamethoxam + lambda cyhalothrin E05 through G10, i.e., at G10 41.5, 14.6 and 88.3, respectively. Key attributes noted by dimpropyridaz at both 108 and 120gai/ha rates compared with commercial standards are seen through the lower stunting symptomology severity response as well as higher total yield by weight kg/ha. Though thiamethoxam + lambda cyhalothrin resulted in higher percent efficacy control of *dalbulus* population throughout the study, it did not reduce symptomology severity or harvest kg/ha to the same level as dimpropyridaz. Dimpropyridaz at 108g ai/ha reduced severity of stunting symptoms by 2.5x and at 120gai/ha, 3x compared with the untreated control. Reduction in stunting symptomology directly correlated with total harvested kernels by weight within study wherein dimpropyridaz treatments were about 1.4x higher than the untreated control and thiamethoxam + lambda cyhalothrin treated plots and about 1.3x higher than the imidacloprid + bifenthrin treated plots. These results demonstrated the importance of rapid feeding cessation of dimpropyridaz in protecting crops and yields from plant disease infection.

### Example 11: Virus transmission (EPG Studies)

The most powerful technique to study the feeding behaviour and plant penetration activities of sap-sucking insects is the electrical penetration graph technique (EPG) (Tjallingii, Entomologia Experimentalis et Applicata 24: 521-530 (1978); Entomologia Experimentalis et Applicata 38, 177-186 (1985)). EPG is an electrical system in which an insect with piercing mouthparts and a plant are made part of an electrical circuit as soon as the insect inserts its mouthparts (stylets) into the plant. As a result, voltage fluctuations are produced and can be recorded as waveforms, thus monitoring the insect's feeding activities and the stylet tip positions in the plant. These voltage fluctuations are due to resistance (R) or electromotive force (emf) changes occurring during stylet penetration. EPG recording has allowed the study of the stylet penetration activities of insect vectors in real time and facilitated correlation of the insect's probing activities with inoculation or acquisition of various plant pathogens (Prado & Tjallingii, Entomologia Experimentalis et Applicata 72: 157-165 (1994); Jiang et al., Annals of the Entomological Society of America 93, 573-579 (2000); Bonani et al., Entomologia Experimentalis et Applicata 134, 35-49 (2010)). It has also been widely used to understand how chemical compounds may affect the feeding behaviour of sap-sucking insects are exposed (e.g., Harrewijn & Kayser, Pesticide Science 49, 130-140 (1997); Jacobson & Kennedy, Pest Management Science 70(5):836-40 (2014)). EPGs have also been recently used as a new tool to monitor the early stages of aphid resistance to insecticides (Garzo et al., Pest Management Science 72(4), 707-18 (2016)).

The EPG technique (Tjallingii 1978) was used to conduct the experiments. EPGs were used to show the impact on corn leafhopper (*Dalbulus maidis,* DALBMA) feeding behaviour on corn plants (*Zea mays,* ZEAMX) previously treated with the selected active ingredients. For these experiments an 8-channel DC-EPG (Giga-8 dd) (electrical penetration graph) divide was connected to an A/D converter card and a personal computer using Stylet⁺ d software for data acquisition and analysis. Waveform pathways that were monitored for output from corn leafhopper feeding include, C = Parenchyma pathway, G = Ingestion from Xylem, E1 = salivation into phloem and E2 = ingestion from phloem. *Dalbulus maidis* vector bacteria in a persistent manner, which means, the insect can transmit or acquire the disease only if its feeds for a longer duration of time in the phloem vessel. In this case a good insecticide for disease vector, needs to kill the insect but moreover needs to stop feeding activities to avoid disease transmission.

Treatments were applied via foliar application. 10 replicates per treatment, 1 insect per plant. Plants were sprayed at the recommended dose with an airbrush sprayer and after the plants dried, EPG plant setup was arranged. The corn leaf hoppers were immobilized under vacuum and cold plate, respectively and connected to a 17 µm, gold wire with the help of silver conductive paint.

Then, insects were connected to a copper electrode and to the DC-EPG device. A plant electrode was used to complete the circuit. EPG signals were acquired for each insect on a different plant and a minimum of 10 replicates per treatment was recorded, interpreted, and analysed. All behavioural variables were processed using the EPG-Excel data Worksheet developed internally.

DC-EPG (Giga-8 dd) output was conducted during a continuous 24-hour recording.

Dimpropyridaz was used as a 120g/L SL formulation compared to commercial standard Thiamethoxam + Lambda cyhalothrin: Engeo^{®} Pleno 141g/L+106g/L SC (Syngenta). Rates of the test compounds:

| Target Species | Rate (gai/ha) | |
|---|---|---|
| | Dimpropyridaz | Thiamethoxam + Lambda cyhalothrin |
| DALBMA | 108 | 42.3 + 31.8 |

EPG Results

**Table 11-1: Total duration of each waveform (Total probe, C, G, E1, and E2) during 24 hours of analysis of the EPG recording**

| Treatment | Wave type - Total duration (minutes) | | | | |
|---|---|---|---|---|---|
| | Total Probe (incl. all tissues - parenchyma, Xylem and Phloem) | C (Parenchyma pathway) | G (Xylem ingestion) | E1 (Phloem salivation) | E2 (Phloem ingestion) |
| Control | 642.5 | 73.3 | 178.4 | 51.0 | 277.4 |
| Dimpropyridaz | 278.4 | 85.0 | 133.8 | 4.2 | 7.5 |
| Thiamethoxam + Lambda cyhalothrin | 350.0 | 142.0 | 135.4 | 9.0 | 22.1 |

Results show the strong impact on the feeding behaviour of dimpropyridaz and other chemical compounds against corn leafhoppers. Phloem is the vessel where *Dalbulus maidis* can transmit stunting disease for corn. The relation of bacteria mollicute, phytoplasma to vector is in a persistent manner, which means the insect can transmit or acquire the disease only if feed for longer time in this vessel. Dimpropyridaz presented with the lowest amount of time (minutes) total probing across all tissues most notably within phloem via salivation and ingestion. When compared to control, verify clear changes in feeding behaviour throughout 24 hours were observed wherein dimpropyridaz reduced the total amount of time for phloem salivation and ingestion, 12x, 37x to 57x, 6.9x respectively. When dimpropyridaz was compared to Thiamethoxam + Lambda cyhalothrin, dimpropyridaz numerically reduced phloem salivation (E1) by about 2x as well as phloem ingestion (E2) by about 3x, confirming interference regarding corn leafhopper feeding behaviour.

### Example 12: Speed of feeding cessation - Honeydew clock results on Aphis gossypii (APHIGO)

Feeding cessation is a critical aspect regarding reduction of disease transmission amongst plant hosts. With differing impacts to insects based on coordination, active probing, feeding and mortality it is key to understand and relate results from EPG studies with a tangible and direct output of feeding. Honeydew is the sugary excrement as produced by piercing and sucking insects such as aphids and whiteflies and can be collected with water sensitive paper to correlate active feeding over an isolated range of time ~24-48 hours. Amount of honeydew production is a direct representation of amount of feeding per hour. Even if insects are persisting on a plant and have not fully succumb to treatment reduction or inhibition of feeding during this period is essential for reduction in transmission of disease.

Cotton plants at growth stage BBCH 12, approximate height 30-35cm, were pre-trimmed to remove all but one single leaf. This leaf was further trimmed to form a rectangular shaped section along its mid-vein to not exceed 6-8mm width, ~24mm length and was supported by metal twist ties at a horizontal plan for the duration of the experiment. Once trimmed and supported, plants were infested with cotton aphids, received from an in-house established colony, via a pre-infested dicotyledon leaf clipping and allowed to settle on plant material for ~12-24 hours prior to treatment. Number of aphids per trimmed plant/leaf were evaluated prior to application, with number of aphids per plant relatively similar amongst all treatments. Application was conducted and plants were allowed to dry for approximately 30 minutes. Treated plants were positioned so that, once dried, the treated leaf would rest 2-3mm above a moisture sensitive paper strip affixed to a 24-hour rotational clock timer (Intermatic Time-All model no. TN111C or TN311C). Moisture sensitive paper was coaxially mounted to the outer rim of a 60mm petri dish lid with double sided tape which was then attached to the front of a 24-hour clock timer via Velcro strips. Replicates were held in tandem on a seven-outlet power strip which was clamped to a rectangular steel base for support. Setups were maintained in under laboratory environmental conditions.

Treatments were applied via foliar dip application wherein infested plants were dipped into solutions of predetermined rates (ppm ai or gai/ha) prepared by formulated compounds diluted in deionized water. Plant foliage was submerged for 3 full seconds ensuring full coverage of plant piece. Total replicates per treatment was 3, totalling 180-300 aphids per treatment.

Test compounds: Dimpropyridaz was used as a 120g/L SL formulation compared to commercial standards Pymetrozine 50% WG (Fulfill^{®}, Syngenta), Spirotetramat 240g/L OD (Movento^{®}, Bayer) tested as commercial products.

| Rate (gai/ha) | | |
|---|---|---|
| Dimpropyridaz 120g/L SL | Pymetrozine 50% WG | Spirotetramat 240g/L OD |
| 40 | 96 | 79 |

### Results

**Table 12-1: Mean total number of aphid honeydew droplets 24-48 hours**

| Treatment + Rate gai/ha | Mean no. total droplets after 48 hours |
|---|---|
| Control | 361.0 |
| Dimpropyridaz 40gai/ha | 67.3 |
| Pymetrozine 96gai/ha | 135.0 |
| Spirotetramat 79gai/ha | 327.0 |

**Table 12-2: Repeated measurement mean number of aphid honeydew droplets per hour over 48 hours**

| Treatment + Rate gai/ha | Mean # droplets per hour |
|---|---|
| Control | 22.7 d |
| Dimpropyridaz 40gai/ha | 6.0 a |
| Pymetrozine 96gai/ha | 7.7 b |
| Spirotetramat 79gai/ha | 17.6 c |

Model = Generalized liner mixed model with negative binomial distribution (log link) and autoregressive 1 covariance structure. P = 0.05.

Results show the advantageous effect of dimpropyridaz treatment on reduction and time of cessation of honeydew production by cotton aphid (*Aphis gossypii*) on cotton compared with relevant global commercial insecticides. Dimpropyridaz showed the lowest number of aphid droplets across 24 - 48 hours (67.3). When average number of droplets per hour was evaluated dimpropyridaz showed a significant reduction noting the lowest number of honeydew droplets throughout the duration of the test. Reduction in feeding as seen by number of honeydew droplets per hour or in total confirm that dimpropyridaz displays feeding activity in a manner that correlates to reduction in disease transmission.

### Example 13: Field Studies - Oilseed Rape (OSR) - Turnip yellow virus (TuYV)

Plants of Winter Oilseed rape (*Brassica napus*) were treated via single foliar spray application, with 300L/ha water volume when plants were at grow stage BBCH 13-18. Aphid population and subsequent disease presence were naturally occurring during the trial period.

Assessments based on number of aphids (Green peach aphid, *Myzus persicae)* per x number plants per plot was conducted at intervals 1-28 days after foliar application along with ELISA %frequency calculations based on plant tissue samples collected at 28 days after treatment along with % estimated plot infection via a spring assessment approximately 6 months later.

Dimpropyridaz was used as a 220g/L SC formulation compared to commercial standards as commercially available formulated products. Lambda-cyhalothrin 100g/L CS (Karate Zeon^{®}, Syngenta), and Sulfoxaflor 50% WG (Isoclast^{®}, Corteva).

### Percent frequency of plants infected with TuYV - ELISA test, 28 days after treatment (DAT)

| Treatment | Rate | %Frequency 28DAT |
|---|---|---|
| Control | - | 74 |
| Dimpropyridaz | 0.12L/ha | 47 |
| | 0.2L/ha | 35 |
| Lambda-cyhalothrin | 0.075L/ha | 40 |
| Sulfoxaflor | 0.048kg/ha | 51 |

### Estimated plot area infested with TuYV - 42 days after treatment

| Treatment | Rate | Infected Area 42DAT |
|---|---|---|
| Control | - | 22.5 |
| Dimpropyridaz | 0.12L/ha | 6.3 |
| | 0.2L/ha | 2.5 |
| Lambda-cyhalothrin | 0.075L/ha | 11.3 |
| Sulfoxaflor | 0.048kg/ha | 6.3 |

Results show the impact on the frequency of plants per plot or total plots infected with TuYV (turnip yellow virus) in OSR. ELISA results showed the least instances of plant infected with TuYV within plots treated with dimpropyridaz at 0.2L/ha. Further confirmation was noted with secondary visual assessment of plot area wherein area infected by TuYV as denoted by symptomology was reduced 2x compared with control area.

### Example 14: Field Studies in Sugar beet - Beet yellow virus (BYV)

Plants of sugar beet Plantina KWS (*Beta vulgaris vulgaris,* BEAVP) were treated via two foliar spray applications, with 200L/ha water volume when plants were at grow stage BBCH 12 & 17. Aphid (*Aphis fabae, Myzus persicae*) population and resulting BYV symptoms were naturally occurring during the trial period.

Assessments were based on visual reduction in BYV symptoms observed at 49 days after the second application.

Test compounds: Dimpropyridaz was used as a 220g/L SC formulation compared to commercial standards: Lambda-cyhalothrin 100g/L CS (Karate Zeon^{®}, Syngenta), Flonicamid 50% WG (Teppeki^{®}, ISK), and Spirotetramat 100g/L SC (Movento^{®}, Bayer).

### Estimated infested plants with BYV - 42 days after second treatment

| Treatment | Rate (gai/ha) | Infected Plants 49DAT2 |
|---|---|---|
| Control | - | 33.8 |
| Dimpropyridaz | 26.4 | 15.0 |
| | 44 | 7.5 |
| Lambda-cyhalothrin | 7.5 | 20.0 |
| Flonicamid | 70 | 25.0 |
| Spirotetramat | 45 | 17.5 |

Results show the impact on the frequency of plants or plot infected with BYV (beet yellow virus) in sugar beet. Visual assessment of number infected plants at 49 days after the second application resulted with the fewest number of impacted plants within 44gai/ha dimpropyridaz treated plots and an overall reduction compared with untreated control of ~4.5x.

### Example 15: Field Studies in Winter barley - Barley yellow dwarf virus (BYDV)

Plants were treated via single foliar spray applications, with 200L/ha water volume when plants were at grow stage BBCH 12-14. Aphid (Bird cherry oat aphid, *Rhopalosiphum padi*) population and related presence of BYDV were naturally occurring throughout the duration of the trial. Assessments were based on visual reduction in BYDV symptoms observed at crop growth stage 55-59, 39 days after treatment.

Dimpropyridaz was used as a 120g/L SL, and 220g/L SC formulations, resp., compared to commercial standard Lambda-cyhalothrin tested as commercial product (100g/L CS (Karate Zeon^{®}, Syngenta).

### Estimated infested plants with BYDV - 39 days after treatment

| Treatment | Rate (L/ha) | % Infected Plot 39DAT |
|---|---|---|
| Control | - | 67.5 |
| Dimpropyridaz 220g/L SC | 0.12 | 18.8 |
| | 0.2 | 10.8 |
| Dimpropyridaz 120g/L SL | 0.25 | 7.0 |
| Lambda-cyhalothrin 100g/L CS | 0.075 | 38.8 |

Results show the strong impact on the frequency of plants or plot infected with BYDV (barley yellow dwarf virus) in winter barley. Visual assessment of percentage of plots displaying BYDV symptomology 39 days after treatment resulted with the lowest percentage of plots impacted by both dimpropyridaz treatments. Dimpropyridaz treatment of 0.2L/ha via 220g/L SC formulation resulted in a reduction of 6x of plots affected compared with the check and dimpropyridaz treatment of 0.25L/ha via 120g/L SL formulation presented with further reduction of ~10x compared to the untreated control.

## Claims

1. Use of 1-[(1RS)-1,2-dimethylpropyl]-N-ethyl-5-methyl-N-pyridazin-4-yl-1H-pyrazole-4-carboxamide (common name dimpropyridaz) of formula I: 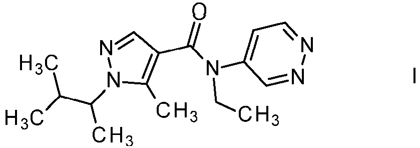
or a stereoisomer, tautomer, salt, or N-oxide thereof,
for reducing or preventing virus or bacteria transmission from insect vectors to plants.

2. Use according to claim 1 for reducing or preventing virus transmission from insect vectors to plants.

3. Use according to claim 1 and 2, wherein dimpropyridaz is applied to fields of non-infected plants.

4. Use according to claim 1 and 2, wherein dimpropyridaz is applied to fields comprising virus-infected and non-infected plants.

5. Use according to claims 1 and 3, wherein dimpropyridaz is applied to fields comprising bacteria-infected and non-infected plants.

6. Use according to any one of claims 1 to 5, wherein dimpropyridaz is applied to the foliage of the plants, preferably in an amount of from 20 g to 200 g per hectare.

7. Use according to any one of claims 1 to 6, wherein the insect vector is selected from aphids, whiteflies, leaf hoppers, and thrips, and is preferably selected from aphids and whiteflies.

8. Use according to any one of claims 1 to 4, 6, and 7, wherein the virus is a persistent virus.

9. Use according to any one of claim 8, wherein the virus is selected from the families *Luteoviridae, Geminiviridae, Nanoviridae, Solemoviridae, Tospoviridae, and Virgaviridae,* and is preferably selected from the genera of *Begomovirus, Nanovirus, Polerovirus, Luteovirus, Tospovirus,* and *Tobamovirus.*

10. Use according to any one of claims 1 to 4, and 6 to 9, wherein the insect vector is an aphid, and the virus is selected from the *Luteoviridae* family, in particular from the genera *Polerovirus, Luteovirus,* or from the *Closteroviridae* family, in particular from the genus *Closterovirus.*

11. Use according to claims 1 to 4, and 6 to 10, wherein the virus is selected from Turnip yellow virus, Barley yellow dwarf virus, Beet yellow virus, Beet chlorosis virus, and Beet mild yellowing virus.

12. Use according to any one of claims 1 to 4, and 6 to 8, wherein the insect vector is a whitefly, and the virus is selected from the *Geminiviridae* family, in particular from the *Begomovirus* genus.

13. Use according to claims 1 to 4, and 6 to 11, wherein the virus is Tomato yellow leaf curl virus.

14. Use according to any one of the preceding claims, wherein the plants are selected from tomatoes, eggplants, potatoes, tobacco, beans and peppers, Oilseed rape, physalis plants, brassicas, lettuce crops, mustard, chickpea, lupin, lentil, beans, peas, lucerne, clover, carrots, cucumber, Barley, wheat, oats, maize, triticale, rice, Sugar beet, and fodder beets.

15. Use according to any one of the preceding claims, wherein the plants are selected from tomatoes, potatoes, oilseed rape, physalis plants, carrots, cucumber, barley, wheat, Sugar beet.

16. Use according to any one of the preceding claims, wherein the primary and/or secondary spread of viruses or bacteria is prevented or reduced.

17. Method for reducing or preventing virus transmission from insect vectors to plants, which method comprises applying dimpropyridaz in a pesticidally effective amount to the crops, plants, plant propagation materials, or soil or water, in which the plants are growing.

18. Method for reducing or preventing bacteria transmission from insect vectors to plants, which method comprises applying dimpropyridaz in a pesticidally effective amount to the crops, plants, plant propagation materials, or soil or water, in which the plants are growing.

19. Method according to claim 17 or 18, wherein dimpropyridaz is applied according to any of claims 3 to 15.

20. Method for protecting plants from virus diseases, which method comprises applying dimpropyridaz to fields of non-infected plants according to claims 3 and 5 to 15.

21. Method for protecting plants from bacterial diseases, which method comprises applying dimpropyridaz to fields of non-infected plants according to claims 1, 3, 5, 6, 7, 14 to 16, and 18.

## Patentansprüche

1. Verwendung von 1-[(1RS)-1,2-Dimethylpropyl]-N-ethyl-5-methyl-N-pyridazin-4-yl-1H-pyrazol-4-carboxamid (gebräuchliche Bezeichnung Dimpropyridaz) der Formel I: 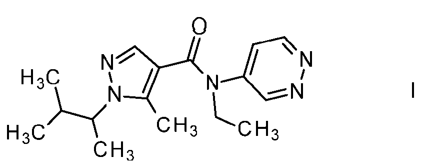
oder eines Stereoisomers, Tautomers, Salzes oder N-Oxids davon,
zum Reduzieren oder Verhindern der Virus- oder Bakterienübertragung von Insektenvektoren auf Pflanzen.

2. Verwendung nach Anspruch 1 zum Reduzieren oder Verhindern der Virusübertragung von Insektenvektoren auf Pflanzen.

3. Verwendung nach Anspruch 1 und 2, wobei Dimpropyridaz auf Felder nicht-infizierter Pflanzen aufgebracht wird.

4. Verwendung nach Anspruch 1 und 2, wobei Dimpropyridaz auf Felder aufgebracht wird, die virusinfizierte und nicht-infizierte Pflanzen umfassen.

5. Verwendung nach den Ansprüchen 1 und 3, wobei Dimpropyridaz auf Felder aufgebracht wird, die bakterieninfizierte und nicht-infizierte Pflanzen umfassen.

6. Verwendung nach einem der Ansprüche 1 bis 5, wobei Dimpropyridaz auf das Laub der Pflanzen aufgebracht wird, vorzugsweise in einer Menge von 20 g bis 200 g pro Hektar.

7. Verwendung nach einem der Ansprüche 1 bis 6, wobei der Insektenvektor ausgewählt ist aus Blattläusen, Mottenschildläusen (weißen Fliegen), Kleinzikaden und Thrips und bevorzugt ausgewählt ist aus Blattläusen und Mottenschildläusen.

8. Verwendung nach einem der Ansprüche 1 bis 4, 6 und 7, wobei das Virus ein persistentes Virus ist.

9. Verwendung nach einem von Anspruch 8, wobei das Virus ausgewählt ist aus den Familien Luteoviridae, Geminiviridae, Nanoviridae, Solemoviridae, Tospoviridae und Virgaviridae, und vorzugsweise ausgewählt ist aus den Gattungen Begomovirus, Nanovirus, Polerovirus, Luteovirus, Tospovirus und Tobamovirus.

10. Verwendung nach einem der Ansprüche 1 bis 4 und 6 bis 9, wobei der Insektenvektor eine Blattlaus ist und das Virus ausgewählt ist aus der Familie der Luteoviridae, insbesondere aus den Gattungen Polerovirus, Luteovirus oder aus der Familie der Closteroviridae, insbesondere aus der Gattung Closterovirus.

11. Verwendung nach den Ansprüchen 1 bis 4 und 6 bis 10, wobei das Virus ausgewählt ist aus dem Wasserrübenvergilbungsvirus, dem Gerstengelbverzwergungsvirus, dem Rübenvergilbungsvirus (BYV), dem chlorotischen Rübenvirus (BChV) und dem milden Rübenvergilbungsvirus (BMYV).

12. Verwendung nach einem der Ansprüche 1 bis 4 und 6 bis 8, wobei der Insektenvektor eine Mottenschildlaus ist, und das Virus ausgewählt ist aus der Familie der Geminiviridae, insbesondere aus der Gattung Begomovirus.

13. Verwendung nach den Ansprüchen 1 bis 4 und 6 bis 11, wobei es sich bei dem Virus um das Gelbblattrollvirus der Tomate (TYLCV) handelt.

14. Verwendung nach einem der vorhergehenden Ansprüche, wobei die Pflanzen ausgewählt sind aus Tomaten, Auberginen, Kartoffeln, Tabak, Bohnen und Paprika, Ölraps, Physalis-Pflanzen, Kohlgewächsen, Salatpflanzen, Senf, Kichererbsen, Lupinen, Linsen, Bohnen, Erbsen, Luzerne, Klee, Karotten, Gurke, Gerste, Weizen, Hafer, Mais, Triticale, Reis, Zuckerrüben und Futterrüben.

15. Verwendung nach einem der vorhergehenden Ansprüche, wobei die Pflanzen ausgewählt sind aus Tomaten, Kartoffeln, Ölraps, Physalis-Pflanzen, Karotten, Gurke, Gerste, Weizen, Zuckerrüben.

16. Verwendung nach einem der vorhergehenden Ansprüche, wobei die primäre und/oder sekundäre Verbreitung von Viren oder Bakterien verhindert oder reduziert wird.

17. Verfahren zum Reduzieren oder Verhindern der Virusübertragung von Insektenvektoren auf Pflanzen, wobei das Verfahren Aufbringen von Dimpropyridaz in einer pestizid-wirksamen Menge auf die Kulturpflanzen, Pflanzen, Pflanzenvermehrungsmaterialien oder Boden oder Wasser, worin die Pflanzen wachsen, umfasst.

18. Verfahren zum Reduzieren oder Verhindern der Bakterienübertragung von Insektenvektoren auf Pflanzen, wobei das Verfahren Aufbringen von Dimpropyridaz in einer pestizid-wirksamen Menge auf die Kulturpflanzen, Pflanzen, Pflanzenvermehrungsmaterialien oder Boden oder Wasser, worin die Pflanzen wachsen, umfasst.

19. Verfahren nach Anspruch 17 oder 18, wobei Dimpropyridaz nach einem der Ansprüche 3 bis 15 aufgebracht wird.

20. Verfahren zum Schutz von Pflanzen vor Viruserkrankungen, wobei das Verfahren Aufbringen von Dimpropyridaz auf Felder von nicht-infizierten Pflanzen nach den Ansprüchen 3 und 5 bis 15 umfasst.

21. Verfahren zum Schutz von Pflanzen vor bakteriellen Erkrankungen, wobei das Verfahren Aufbringen von Dimpropyridaz auf Felder von nicht-infizierten Pflanzen nach den Ansprüchen 1, 3, 5, 6, 7, 14 bis 16 und 18 umfasst.

## Revendications

1. Utilisation de 1-[(1RS)-1,2-diméthylpropyl]-N-éthyl-5-méthyl-N-pyridazin-4-yl-1H-pyrazole-4-carboxamide (nom commun dimpropyridaz) de formule I : 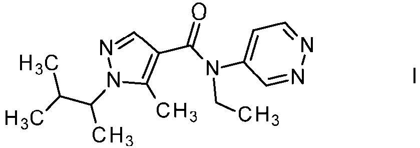
ou d'un stéréoisomère, d'une forme tautomère, d'un sel, ou d'un N-oxyde de celui-ci,
pour réduire ou empêcher la transmission de virus ou de bactéries à partir d'insectes vecteurs à des végétaux.

2. Utilisation selon la revendication 1 pour réduire ou empêcher la transmission de virus à partir d'insectes vecteurs à des végétaux.

3. Utilisation selon les revendications 1 et 2, dans laquelle le dimpropyridaz est appliqué sur des champs de végétaux non infectés.

4. Utilisation selon les revendications 1 et 2, dans laquelle le dimpropyridaz est appliqué sur des champs comprenant des végétaux infectés par un virus et non infectés.

5. Utilisation selon les revendications 1 et 3, dans laquelle le dimpropyridaz est appliqué sur des champs comprenant des végétaux infectés par des bactéries et non infectés.

6. Utilisation selon l'une quelconque des revendications 1 à 5, dans laquelle le dimpropyridaz est appliqué sur le feuillage des végétaux, de préférence en une quantité allant de 20 g à 200 g par hectare.

7. Utilisation selon l'une quelconque des revendications 1 à 6, dans laquelle l'insecte vecteur est choisi parmi les pucerons, les mouches blanches, les sauterelles foliaires et les thrips, et est de préférence choisi parmi les pucerons et les mouches blanches.

8. Utilisation selon l'une quelconque des revendications 1 à 4, 6 et 7, dans laquelle le virus est un virus persistant.

9. Utilisation selon l'une quelconque de la revendication 8, dans laquelle le virus est choisi parmi les familles Luteoviridae, Geminiviridae, Nanoviridae, Solemoviridae, Tospoviridae, et Virgaviridae, et est de préférence choisi parmi les genres Begomovirus, Nanovirus, Polerovirus, Luteovirus, Tospovirus, et Tobamovirus.

10. Utilisation selon l'une quelconque des revendications 1 à 4, et 6 à 9, dans laquelle l'insecte vecteur est un puceron, et le virus est choisi parmi la famille des Luteoviridae, en particulier parmi les genres Polerovirus, Luteovirus, ou parmi la famille des Closteroviridae, en particulier parmi le genre Closterovirus.

11. Utilisation selon les revendications 1 à 4, et 6 à 10, dans laquelle le virus est choisi parmi le virus de la jaunisse du navet, le virus du nanisme jaune de l'orge, le virus de la jaunisse de la betterave, le virus de la chlorose de la betterave et le virus du jaunissement léger de la betterave.

12. Utilisation selon l'une quelconque des revendications 1 à 4, et 6 à 8, dans laquelle l'insecte vecteur est une mouche blanche, et le virus est choisi dans la famille des Geminiviridae, en particulier parmi le genre Begomovirus.

13. Utilisation selon les revendications 1 à 4, et 6 à 11, dans laquelle le virus est le virus des feuilles jaunes en cuillère de la tomate.

14. Utilisation selon l'une quelconque des revendications précédentes, dans laquelle les végétaux sont choisis parmi les tomates, les aubergines, les pommes de terre, le tabac, les haricots et les poivrons, le colza, les végétaux de physalis, les brassicas, la laitue, la moutarde, le pois chiche, le lupin, les lentilles, les haricots, les pois, la luzerne, le trèfle, les carottes, le concombre, l'orge, le blé, l'avoine, le maïs, le triticale, le riz, la betterave à sucre et les betteraves fourragères.

15. Utilisation selon l'une quelconque des revendications précédentes, dans laquelle les végétaux sont choisis parmi les tomates, les pommes de terre, le colza, les végétaux de physalis, les carottes, le concombre, l'orge, le blé, la betterave à sucre.

16. Utilisation selon l'une quelconque des revendications précédentes, dans laquelle la propagation primaire et/ou secondaire de virus ou de bactéries est empêchée ou réduite.

17. Procédé pour réduire ou empêcher la transmission de virus à partir d'insectes vecteurs à des végétaux, lequel procédé comprend l'application de dimpropyridaz en une quantité efficace du point de vue pesticide sur les cultures, les végétaux, les matériels de propagation végétale, ou le sol ou l'eau, dans lesquels les végétaux poussent.

18. Procédé pour réduire ou empêcher la transmission de bactéries à partir d'insectes vecteurs à des végétaux, lequel procédé comprend l'application de dimpropyridaz en une quantité efficace du point de vue pesticide sur les cultures, les végétaux, les matériels de propagation végétale, ou le sol ou l'eau, dans lesquels les végétaux poussent.

19. Procédé selon la revendication 17 ou 18, dans lequel le dimpropyridaz est appliqué selon l'une quelconque des revendications 3 à 15.

20. Procédé de protection de végétaux contre des maladies virales, lequel procédé comprend l'application de dimpropyridaz sur des champs de végétaux non infectés selon les revendications 3 et 5 à 15.

21. Procédé de protection de végétaux contre des maladies bactériennes, lequel procédé comprend l'application de dimpropyridaz sur des champs de végétaux non infectés selon les revendications 1, 3, 5, 6, 7, 14 à 16, et 18.
